(19) Europäisches Patentamt
European Patent Office
Office européen des brevets

(11) EP 0 615 007 B1

(12) **EUROPÄISCHE PATENTSCHRIFT**

(45) Veröffentlichungstag und Bekanntmachung des Hinweises auf die Patenterteilung:
**04.02.2004 Patentblatt 2004/06**

(51) Int Cl.[7]: **D01F 1/10**, D01F 8/00, H01G 7/02, B01D 39/16, D04H 1/42

(21) Anmeldenummer: **94103273.2**

(22) Anmeldetag: **04.03.1994**

(54) **Elektretfasern mit verbesserter Ladungsstabilität, Verfahren zu ihrer Herstellung, und Textilmaterial enthaltend diese Elektretfasern**

Electret fibers with improved charge stabilisation, process for their production and textile material containing these electret fibers

Fibres d'électret avec stabilisation de la charge améliorée, procédé pour leur fabrication et matériau textile contenant ces fibres d'électret

(84) Benannte Vertragsstaaten:
**AT BE CH DE DK ES FR GB IE IT LI NL PT SE**

(30) Priorität: **09.03.1993 DE 4307398**
**26.06.1993 DE 4321289**

(43) Veröffentlichungstag der Anmeldung:
**14.09.1994 Patentblatt 1994/37**

(73) Patentinhaber: **TREVIRA GMBH**
**60528 Frankfurt am Main (DE)**

(72) Erfinder:
- **Dahringer, Jörg**
  **D-86399 Bobingen (DE)**
- **Groh, Werner, Dr.**
  **D-35423 Lich (DE)**
- **Macholdt, Hans-Tobias, Dr.**
  **D-64297 Darmstadt (DE)**
- **Boening, Peter**
  **D-65197 Wiesbaden (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
**EP-A- 0 180 655**
**EP-A- 0 315 082**
**EP-A- 0 315 083**
**EP-A- 0 375 781**
**EP-A- 0 476 648**
**EP-A- 0 548 826**
**DE-A- 3 509 857**
**DE-A- 3 839 956**
**DE-A- 4 031 705**

- **PATENT ABSTRACTS OF JAPAN vol. 12, no. 421 (C-541)8. November 1988 & JP-A-63 151 326 (ASAHI CHEM IND CO LTD) 23. Juni 1988**
- **DATABASE WPI Section Ch, Week 8825, Derwent Publications Ltd., London, GB; Class A, AN 88-172123 & JP-A-63 110 716 (SHOWA DENKO KK) 16. Mai 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Elektretfasern, die aufgrund eines Gehaltes an Ladungssteuermitteln eine erheblich verbesserte Ladungsstabilität aufweisen, deren Herstellung und faden- und flächenförmige Textilmaterialien, insbesondere Garne, Kabel und Vliese, die aus diesen verbesserten Elektretfasern bestehen oder diese enthalten.

Elektretfasern im Sinne dieser Erfindung sind Fasern aus elektrisch nichtleitenden Materialien, die eine aufgebrachte elektrostatische Ladung über längere Zeit zu speichern vermögen.

Elektretfasern sind bisher hauptsächlich im Zusammenhang mit dem Problem der Feinststaubfiltration beschrieben worden. (Z.B. von Biermann, "Evaluation of permanently charged electrofibrous filters", 17. DOE Nuclear Air Cleaning Conference, Denver, USA, (1982) sowie L. Bergmann in Chemiefasern/Textilindustrie 40/92, (1990/9), Seite T123).

Die beschriebenen Filtermaterialien unterscheiden sich sowohl hinsichtlich der Materialien, aus denen die Fasern bestehen als auch bezüglich der Art und Weise wie die elektrostatische Ladung auf die Fasern aufgebracht wird.

Die elektrostatische Ladung kann durch verschiedene Methoden appliziert werden.

So ist es möglich, Polymer-Folien auf beiden Seiten unterschiedlich elektrostatisch aufzuladen und anschschließend zu spalten. Man erhält hierbei sog. Split-Film-Fasern, die in der Regel als Faservlies abgelegt werden.

Weiterhin ist es bekannt, in ein starkes elektrostatisches Feld hineinzuspinnen oder die ersponnenen Fasern oder Fasererzeugnisse, z.B. Vliese, einer elektrischen Coronaentladung, z.B. zwischen hochgespannten Spitzen oder Drähten und geerdeten Flächenelektroden, auszusetzen.

Besonders vorteilhaft ist die Aufladung durch triboelektrische Effekte, d.h. Ladungstrennung durch Reibung der Fasermaterialien mit anderen Medien, z.B. anderen Polymermaterialien, Festkörpern wie Metallflächen oder auch flüssigen oder gasförmigen Medien.

Verschiedene Faserrohstoffe wurden bisher untersucht und empfohlen um Elektretfasern mit vorteilhaften Elektreteigenschaften, wie langdauernder Ladungsstabilität, Feuchtigkeits- und Chemikalienresistenz herzustellen. Dabei sollen diese vorteilhaften Eigenschaften auch bei möglichst geringen Kosten zu erzielen sein.

Dabei haben sich Fluorpolymere wie Polytetrafluorethylen oder perfluorierte Ethylen/Propylen-Copolymere als sehr gute Elektretwerkstoffe erwiesen, die hohe Ladungsstabilität, charakterisiert durch eine Ladungs-Halbwertszeit (Ladungs-Lebensdauer) von Jahren bis Jahrzehnten, mit guter Temperaturstabilität und geringer Feuchtigkeitsaufnahme vereinen. Gravierende Nachteile dieser Polymere, wie ihr hoher Preis und die großen Schwierigkeiten ihrer Verarbeitung, haben jedoch ihren Einsatz weitgehend verhindert.

Gute Resistenz gegen Chemikalien und Feuchtigkeit haben auch Elektretfasern aus Polyolefinen, wie Polyethylen und Polypropylen, oder aus Polycarbonaten. Handelsübliche Feinststoffilter bestehen aus diesen Elektretmaterialien (Chemiefasern/Textilindustrie, wie oben angegeben). Ein gravierender Nachteil dieser Fasern ist die relativ geringe Ladungs-Halbwertszeit die nur in der Größenordnung von etwa einem Jahr liegt. Dies ist in der Regel ein zu geringer Zeitraum, wenn man bedenkt, daß z.B. beim Einsatz der Fasern für die Filterherstellung die Zeit von der Faserherstellung bis zur Ingebrauchnahme des Filters plus der Filter-Lebensdauer leicht über einem Jahr liegen kann.

Schon solange Elektretfasern zur Herstellung von Feinststoffiltern empfohlen und benutzt wurden, bestand daher ein stetiges dringendes Bedürfnis, einen Faserwerkstoff zu finden, der Preiswürdigkeit mit deutlich verbesserter Ladungsstabilität, Resistenz gegen Feuchtigkeit und Chemikalien, sowie gute textiltechnische und mechanische Eigenschaften in sich vereint und es sind auch bereits Vorschläge hierzu bekannt geworden.

In der US-Patentschrift 4,789,504 wird empfohlen, die Effektivität von Polypropylen-Elektretfiltern dadurch zu steigern, daß dem Polymermaterial ein Fettsäure-Salz zugesetzt wird.

Aus Journal of Electrostatics, 24 (1990) S. 283-293 ist es bekannt, daß die Temperatur, bei der unter standardisierten Meßbedingungen die Ladungsdichte eines Polyacrylat-Elektrets auf die Hälfte sinkt, von 126 auf 180 °C steigt, wenn dem Polymer ca. 10 Gew.-% Titandioxid zugesetzt wird. Dieser Zusatz hat jedoch neben einer Verschlechterung mechanischer Eigenschaften eine erhöhte Feuchtigkeitsempfindlichkeit zur Folge, die einem Einsatz in Filtermaterialien entgegensteht.

Es wurde nun gefunden, daß es möglich ist Fasern herzustellen, die ausgezeichnete textile Eigenschaften und eine erheblich verlängerte Halbwertszeit der elektrischen Ladung, d.h. eine erheblich verbesserte Ladungsstabilität, aufweisen.

Die erfindungsgemäßen Elektretfasern mit verbesserter Ladungsstabilität sind dadurch gekennzeichnet, daß sie aus einem Werkstoff bestehen, der überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs eines kationischen Ladungssteuermittels der Formel

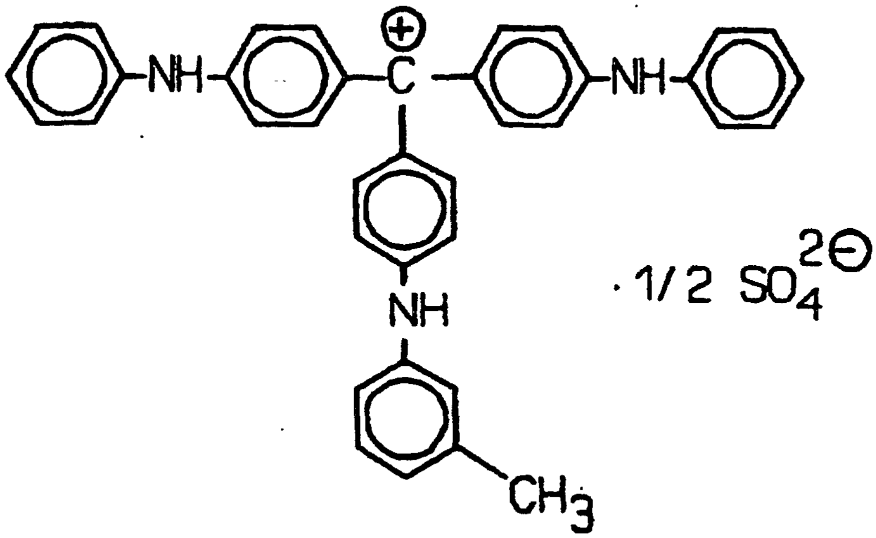

enthält.

Fasern im Sinne der vorliegenden Erfindung sind Endlosfasern (Filamente) oder Stapelfasern, vorzugsweise mit Stapellängen von 0,5 bis 50 mm oder Pulpe, Spaltfasern oder Split-Film-Fasern, die auch in speziellen Ausführungsformen für spezielle Anwendungszwecke vorliegen können.

Niedrig- oder teilorientierte Elektretfasern, d.h. solche die nur wenig oder garnicht verstreckt wurden, können wie Normalfasern als Schmelzklebefaser zur Verfestigung von z.B. Vliesen eingesetzt werden; Hochschrumpf-Elektretfasern können zur Verdichtung und Verfestigung von textilen Flächengebilden, insbesondere von Vliesen eingesetzt werden.

Mehrkomponenten-Elektretfasern, können in Kern/Mantelanordnung oder auch in Seite an Seite-Anordnung vorliegen, wobei eine der Komponenten die erfindungsgemäße Elektretfaser ist.

Mehrkomponentenfasern und ihre Herstellung sind beschrieben z.B. in "Falkai, Synthesefasern", Seite 124 ff. insbes Abb 5.4.

Mehrkomponentenfasern mit einer erfindungsgemäßen Elektretkomponente können für besondere Zwecke eingesetzt werden, z.B. Seite an Seite -Fasern als selbstkräuselnde Fasern, wenn die Komponenten einen unterschiedlichen Hitzeschrumpf haben; Kern/Mantel-Fasern als Klebefasern, wenn der Mantel einen relativ niedrigen Schmelzpunkt hat, oder bei entsprechender Querschnittsanordnung der Komponenten, z.B. in der Island/Sea-Anordnung, auch als Spaltfasern zur Herstellung besonders feiner Titer der Elektretfasern. Eine weitere interessante Kern/Mantel Anordnung der erfindungsgemäßen Fasern besteht aus einem Kern aus normalem Polymerwerkstof f und einem Mantel aus Elektretwerkstoff.

Bevorzugt sind erfindungsgemäße Fasern mit besonders großer Oberfläche, d.h. feine Titer z.B. unter 3 dtex, insbesondere unter 2 dtex, oder multilobale Profilfasern z.B. mehrkantige oder sternförmige Profile oder beispielsweise Bändchen- oder Hantelprofile.

Die Fasern können in allen Verarbeitungszuständen, wie z.B. als Monofilamente, als Haufwerk oder Flocke, als Pulp-Aufschlämmung, als lineare Gebilde wie Spinnfasergarn, Multifilamentgarn, Kabel, Sliver, oder als Flächengebilde wie Wirrvliese aus Stapel- oder Endlosfasern insbesondere Spunbonds oder Krempel- oder Kardenvliese, Gelege, Gewebe oder als Maschenware vorliegen.

Besonders bevorzugt sind die erfindungsgemäßen Elektretfasern in Form von Multifilamentgarnen, Kabel und Vliesen.

Gegenstand dieser Erfindung sind sowohl die elektrisch neutralen Fasern und Faserprodukte, wie z . B. Garne, Kabel oder Vliesstoffe, als auch die elektrostatisch geladenen. Dabei ist es unerheblich ob die Ladung gezielt aufgebracht wurde (z.B. durch Coronaentladung) oder spontan durch triboelektrische Effekte entstanden ist.

Während die verbesserten elektrischen Eigenschaften der erfindungsgemäßen Elektretfasern im Wesentlichen auf dem charakteristischen Elektretverhalten des zu ihrer Herstellung eingesetzten Werkstoffs beruhen, ergeben sich die anwendungstechnischen Vorzüge in ihrer Gesamtheit aus der vorteilhaften Kombination elektrischer und mechanischer, und formbedingter Eigenschaften.

Der Werkstoff, aus dem die erfindungsgemäßen Fasern bestehen zeichnet sich durch eine verbesserte Ladungsstabilität aus.

Diese findet ihren Ausdruck in einem deutlich verbesserten anwendungstechnischen Verhalten bei allen Anwendungen, bei denen das Vorhandensein einer elektrostatischen Aufladung der Fasern eine positive Rolle spielt, z.B. beim Einsatz der erfindungsgemäßen Elektretfasern zur Herstellung von Staubfiltern.
Die Verbesserung der Ladungsstabilität kommt nach unserer bisherigen Erkenntnis einerseits über eine Verbesserung der Ladungshaltung, d.h. der Aufrechterhaltung eines einmal hergestellten Ladungszustands der Fasern unter Anwendungsbedingungen, und andererseits über den Effekt der spontanen Ladungsbildung durch triboelektrische Effekte, die zu einem dynamischen Gleichgewicht der Aufladung führen, zustande. In der Praxis dürften beide Effekte zusammenwirken, ggf. mit unterschiedlichen Anteilen, je nach dem, welches Polymermaterial im Faserwerkstoff überwiegend enthaltenen ist.
Der Effekt der verbesserten Ladungshaltung manifestiert sich darin, daß der Werkstoff, aus dem die erfindungsgemäßen Elektretfasern bestehen,

a) nach einer elektrischen Aufladung ein Maximum des Entladestromes bei einer Temperatur oberhalb 50 °C, vorzugsweise zwischen 100-250 °C, insbesondere zwischen 100 und 180°C aufweist, wobei die Entladestromkurve nach Durchlaufen des Maximums wieder einen ausgeprägten abfallenden Ast aufweist, und

b) bei 25 °C eine Halbwertszeit der elektrischen Ladung von mindestens 6 Monaten hat, wobei

c) seine Ladungs-Halbierungstemperatur oberhalb 100 °C, vorzugsweise zwischen 100-250 °C, insbesondere zwischen 100 und 180°C liegt und

d) nach einer Standard-Aufladung (einseitig geerdete Folie von 50 µm Stärke, 3 Min. einer Corona-Entladung ausgesetzt) eine Ladungsdichte von mindestens $1 \cdot 10^{-9}$ Coulomb/cm$^2$ aufweist.

Die Messung des Entladestromes des Werkstoffs erfolgt in der Weise, daß eine kreisförmige, in einem Halter eingespannte Probe einer aus dem Werkstoff hergestellten Folie einseitig mit einer Aluminiumschicht bedampft wird, mit der metallisierten Seite auf einen geerdeten Metallblock aufgelegt wird und von der freien Seite mit einer Coronaentladung 3 Min. aufgeladen wird. Danach wird die Probe abgekült und einige Std. bei Normaltemperatur konditioniert. Anschließend wird die Entladung der Elektretprobe mit Hilfe der "Air Gap Current TSC "-Methode (beschrieben in "Electrets", Editor G.M.Sessler, in "Topics in Applied Physics", 2. Auflage, (1987), Vol. 33, S.95 ff., Springer Verlag) bei einer Aufheizgeschwindigkeit von 2 °C/min. gemessen.
Während des Aufheizens wird kontinuierlich der Entladestrom gemessen und gegen die Temperatur aufgezeichnet.
Charakteristisch für den Werkstoff ist, neben der Ladungsmenge, die Lage der Temperaturpeaks des Entladestroms und das Vorhandensein eines abfallendes Astes der Entladekurve hinter den Peaks.
Die Halbwertszeit der elektrischen Ladung ist der Zeitraum, innerhalb dessen die ursprünglich auf den Elektretwerkstoff aufgebrachte Ladung bei 25 °C auf die Hälfte abgesunken ist.
Unter der Ladungs-Halbierungstemperatur soll diejenige Temperatur verstanden werden, bei der, bei einer Aufheizgeschwindigkeit von 2 °C/min, die Ladungsdichte des Werkstoffs auf die Hälfte ihres bei 25 °C geltenden Wertes absinkt.
Viele erfindungsgemäße Elektretfasern zeigen überraschenderweise einen hohen triboelektrischen Effekt, d. h. sie neigen stark dazu, sich spontan durch Wechselwirkung miteinander und mit ihrer Umgebung aufzuladen. Dies führt dazu, daß z.B. ein aus diesen Fasern bestehendes oder diese Fasern enthaltendes Staubfilter auch ohne gesonderte elektrische Aufladung (z.B. durch eine Corona-Entladung) bei der Durchströmung mit Gasen (z.B. im Gebrauch) oder durch Reibung der Fasern aneinander oder an andersartigen festen Materialien spontan eine erheblich höhere elektrostatische Aufladung und damit eine wesentlich bessere Partikelabscheidung erreicht, als ein gleich aufgebautes Staubfilter aus Normalfasern.
Besonders überraschend ist es, daß die signifikante Verbesserung des Abscheidungsgrades von Staubpartikeln sich auch dann ergibt wenn, beispielsweise in einer Entfernung von einigen Zentimetern vom Filtermaterial, gar kein elektrostatisches Feld messbar ist.
Die leicht unter Standardbedingungen meßbare relative Verbesserung des Abscheidungsgrades $TR_{\%}$ in [%] eines Vliestoffilters aus erfindungsgemäßen Elektretfasern gegenüber einem gleichen Filter aus Normalfasern stellt daher einen Parameter dar, der sehr gut zur Charakterisierung der Verbesserung der Ladungsstabiltät der erfindungsgemäßen Elektretfasern geeignet ist.
Zur Bestimmung des Faserparameters $TR_{\%}$ wird aus den zu untersuchenden erfindungsgemäßen Elektretfasern ein Vliesstoff hergestellt mit einem Flächengewicht von 100 ± 5 g/m$^2$, einem Fasertiter von 1,7 ± 0, 2 dtex und einer Dichte entsprechend einer Druckdifferenz vor und hinter dem Filter von 8-12 Pa bei einer Anströmgeschwindigkeit von 20 cm/s, das aus 80 Gew.% der zu prüfenden Elektretfasern und 20 Gew.% Bikomponenten-Bindefasern besteht. Außerdem wird ein zweites, bezüglich Flächengewicht, Fadentiter und Dichte gleiches Vliesstoffilter hergestellt, das jedoch anstelle der zu untersuchenden Elektretfasern Normalfasern (d.h. Fasern aus dem gleichen Polymermaterial

aber ohne Gehalt an Ladungssteuermittel) enthält.
Von beiden Filtern wird der Abscheidungsgrad für Staubpartikel mit einer mittleren Partikelgröße von 0,3 bis 0,5 µm gemessen. Ist T(x) der Abscheidungsgrad des erfindungsgemäßen Filters, und T'(x) der des Vergleichsfilters, so ist $T_E = \ln(1-T(x))$ und $T_V = \ln(1-T'(x))$ für x-Werte von 0,3 bis 0,5 µm, und $TR_{\%}$ ergibt sich aus der Formel

$$TR_{\%}\ [\%] = \frac{T_E * 100}{T_V} - 100$$

Erfindungsgemäße Elektretfasern haben einen $TR_{\%}$-Wert von mindestens 30%, vorzugsweise mindestens 50%, beispielsweise von 40 bis 60 % und/oder sie weisen die oben unter den Punkten a) bis d) angegebenen, die Ladungshaltung charakterisierenden Merkmale auf.

Für erfindungsgemäße Elektretfasern, die auf Basis eines Polymers mit geringer Ladungshaltung hergestellt werden, charakterisiert der $TR_{\%}$-Wert im wesentlichen den Beitrag des triboelektrischen Effekts zur Verbesserung der Ladungsstabilität der Elektretfasern gegenüber Normalfasern.

Die Verbesserung der Ladungsstabilität korreliert naturgemäß in gewissen Grenzen mit der Konzentration des Ladungsteuermittels in dem Werkstoff der erfindungsgemäßen Elektretfasern.
Die Konzentration wird so eingestellt, daß die Fasern gegenüber herkömmlichen eine ausreichende Verbesserung der elektrischen Eigenschaften bei gleichzeitigem Erhalt guter textiltechnischer und mechanischer Eigenschaften aufweisen.
Die verbesserten elektrischen Eigenschaften ergeben sich aus der Zusammensetzung des Werkstoffs.
Der Werkstoff besteht in der Regel überwiegend aus einem Polymerisat oder Polykondensat, kann jedoch andere Polymere oder Monomere oder auch anorganische Zusatzstoffe enthalten, die üblicherweise in synthetischen Fasermaterialien zur Ausbildung spezieller Eigenschaften vorhanden Sind. Als Beispiel seien nur die Mattierungsmittel genannt.
Als Polymerisate im sinne dieser Erfindung sind nicht nur die durch Polymerisation erhaltenen hochmolekularen Verbindungen, wie z.B. Polyolefine, Polyacrylate, Polyacrylnitril u.dgl. anzusehen, sondern auch die durch Polykondensation herstellbaren, wie z.B. Polyester oder Polyamide u.s.w..
Die Polymerisate und Polykondensate, die in dem erfindungsgemäß einzusetzenden Werstoff überwiegend enthalten sind, haben in der Regel intrinsische Viskositäten von 0,45 bis 1,2, vorzugweise 0,6 bis 0,9 dl/g, gemessen in Dichloressigsäure bei 25 °C.

Das fadenbildende Polymerisat oder Polykondensat des erfindungsgemäß einzusetzenden Werkstoffs ist schmelzspinnbar oder lösungsspinnbar.
Aus Lösungen durch Nass- oder Trockenspinnverfahren verspinnbare Polymere gestatten den Einsatz von thermisch weniger stabilen Ladungssteuermitteln.

Eine Ausführungsform der Erfindung ist dadurch gekennzeichnet, daß der Werkstoff überwiegend ein fadenbildendes Polymerisat enthält aus der Gruppe der Polyolefine, der halogenierten Polyolefine, der Polyacrylate, Polyacrylnitril, Polystyrol und Fluorpolymeren.
Vorzugsweise enthält ein solcher Werkstoff überwiegend ein fadenbildendes Polymerisat aus der Gruppe Polyethylen, Polypropylen, Polyacrylnitril, Polytetrafluorethylen und perfluoriertes Ethylen/Propylen-Copolymer, insbesondere aus der Gruppe Polyethylen und Polypropylen.

Eine andere Ausführungsform der Erfindung ist dadurch gekennzeichnet, daß der Werkstoff überwiegend ein fadenbildendes Polykondensat enthält aus der Gruppe der Polyester, insbesondere Polyalkylenterephthalat, wie z.B. Polyethylenterephthalat, Polycarbonate, aliphatische oder aromatische Polyamide, Polyimide, Polyetherketone (z.B. PEK und PEEK), Polyarylensulfide insbesondere Polyphenylensulfid, Polyacetale und Zelluloseester, insbesondere Zellulose-2 1/2- und tri-azetat.

Erfindungsgemäße Elektretfasern aus aromatischen Polyamiden, Polyetherketonen (z.B. PEK und PEEK), und Polyarylensulfiden insbesondere Polyphenylensulfiden, erfüllen insbesondere Forderungen nach erhöhter chemischer und/oder thermischer Beständigkeit.

Eine weitere bevorzugte Ausführungsform der Erfindung ist dadurch gekennzeichnet, daß der Werkstoff überwiegend ein fadenbildendes Polykondensat aus der Gruppe der Polyester, Polyetherketone und Polyphenylensulfid, insbesondere Polyalkylenterephthalat enthält. Eine weitere bevorzugte Ausführungsform der Erfindung ist dadurch gekennzeichnet, daß der Werkstoff überwiegend Polypropylen enthält.
Erfindungsgemäße Polypropylen- und Polyester- Elektretfäden können unter dem Gesichtspunkt der Sortenreinheit (leichte Recyclisierbarkeit) mit besonderem Vorteil im Kraftfahrzeugbau eingesetzt werden.

Vorzugsweise sind die Ladungssteuermittel in dem Faserwerkstoff überwiegend in dispergierter Form enthalten. Das bedeutet, daß der Werkstoff vorzugsweise ein mehrphasiges System darstellt, in dem das Ladungssteuermittel eine feinteilige, feste Phase bildet, die in der kontinuierlichen Phase des fadenbildenden Polymerisats oder

Polykondensats fein verteilt ist.
"Überwiegend" im Sinne dieser Erfindung bedeutet, daß ein gewisser, meist geringer Anteil des Ladungssteuermittels in dem fadenbildenden Polymerisat oder Polykondensat auch echt gelöst sein kann, d.h. in molekularer Verteilung vorliegt. Die Höhe dieses Anteils richtet sich naturgemäß nach der Löslichkeit des Ladungssteuermittel in dem Polymerisat bzw. Polykondensat.
Die Untergrenze der mittleren Teilchengröße der dispergierten Ladungssteuermittel kann an der Untergrenze kolloidaler Verteilung liegen, d.h. daß im Mittel zumindest eine Dimension der Teilchen eine Größe von etwa 1 nm aufweist. Die Obergrenze liegt in der Regel bei etwa 20 µm.
In besonderen Fällen, z.B. bei der Herstellung der Dispersionen durch Fällungsoperationen oder durch spezielle Kristallisationsoder Mahlprozesse, können die Ladungssteuermittel auch mittlere Teilchengrößen von unter 1 nm oder über 20 µm aufweisen.
Im Einzelfall wird die Teilchengröße der einzudispergierenden Ladungssteuermittel zweckmäßigerweise so eingestellt, daß sich die optimale Ladungsstabilisierung ergibt. Selbstverständlich ist auch die (Re-)Dispergierbarkeit (d.h. das Zerteilen von eventuell aus Primärteilchen und/oder Aggregaten gebildeten Agglomeraten), und die Homogenisierbarkeit der Dispersionen angemessen zu berücksichtigen.

In der Praxis haben sich für die in die erfindungsgemäßen Elektretfasern eindispergierten Ladungssteuermittel Teilchengrößen von 0,01 bis 10 µm, insbesondere 0,03 bis 1,0 µm bewährt.
Von besonderer Bedeutung für die anwendungstechnischen Eigenschaften der erfindungsgemäßen Elektretfasern ist auch die Stabilität der Dispersion der darin enthaltenen Ladungssteuermittel über längere Zeiträume und/oder unter belastenden Bedingungen.
Besonders vorteilhaft ist auch eine möglichst enge Teilchengröße-Verteilung der Ladungssteuermittel in den erfindungsgemäßen Elektretfasern.

Die erfindungsgemäßen Elektretfasern enthalten als Ladungssteuermittel eine Verbindung der angegebener Formel.

Diese Verbindung ist bekannt als C.I. Solvent Blue 124 und entspricht der Formel :

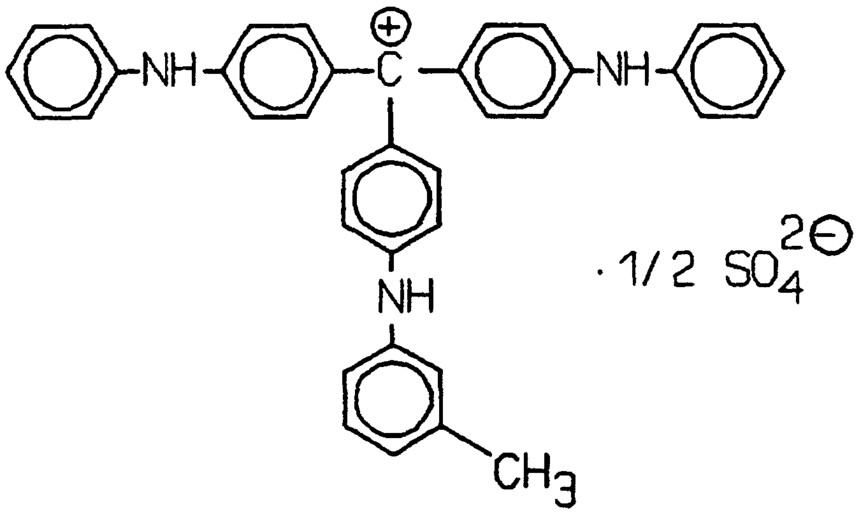

Die vielseitigen Anwendungsmöglichkeiten der erfindungsgemäßen Elektretfasern werden ermöglicht durch die Kombination der oben beschriebenen Werkstoffzusammensetzung mit den durch die bei der Formgebung angewendeten Bedingungen einzustellenden textiltechnischen Daten der Fasern. Es ist dabei überraschend, daß die Elektretfasern sich mit praktisch der gleichen Bandbreite textiltechnischer Eigenschaften herstellen lassen, wie die Fasern die aus dem entsprechenden Polymer ohne Ladungssteuermittel-Zusatz hergestellten wurden.

Die erfindungsgemäßen Elektretfasern haben einen Titer im Bereich von 0,02 bis 20 dtex.
Für den Fall der "Split-Film-Fasern" kommt ein durchschnittlicher Titer von 0,02 bis 30 dtex in Betracht, mit geringen Anteilen gröberer und feinerer Fasern.
Fasern mit einem Titer von 0, 02 bis 1 dtex, insbesondere von 0, 02 bis 0,5 dtex vorzugsweise durch die "splitting" Technik (nicht zu verwechseln mit der Split-Film-Technik) hergestellt. Dabei werden Bikomponentenfasern, die aus Elektretwerkstoff und einem in einem Lösungsmittel löslichen Werkstoff mit "Island in the Sea" - Querschnitte hergestellt werden und wobei der Elektretwerkstoff die Inseln bildet, mit dem betreffenden Lösungsmittel behandelt. Dabei lösen

sich die löslichen Anteile der Bikomponentenfaser auf und es werden die außerordentlich feinen Inselfasern erhalten.

Die erfindungsgemäßen Elektretfasern sind weiterhin dadurch gekennzeichnet, daß die Reißfestigkeit der Fasern 20 bis 80, vorzugsweise 30 bis 65 cN/tex,
die Reißdehnung 10 bis 200 %, vorzugsweise 10 bis 60 %, insbesondere 20 bis 50 %,
der Hitzeschrumpf, gemessen bei 200 °C trocken ($S_{200}$) 0 bis 50 %, vorzugsweise < 10 % beträgt.

Die textiltechnischen Daten Reißfestigkeit, Dehnung und Hitzeschrumpf werden in üblicher Weise bei der Herstellung durch Einstellung der Spinngeschwindigkeit, der Verstreckung und der Fixierbedingungen bedarfsgerecht gesteuert.
Reißfestigkeiten von 20-30 cN/tex werden für Spezialanwendungen interessant, wo es darauf ankommt, daß die Fasern bei bestimmten Belastungen reißen können. Der übliche textile Anwendungsbereich erfordert Festigkeiten von ca 30-60 cN/tex. Technische Fasermaterialien dagegen müssen hohe Festigkeiten im Bereich bis etwa 80 cN/tex aufweisen.
Auch die Dehnung wird anwendungsspezifisch eingestellt. Für technische, hochfeste Garne werden geringe Dehnungen von etwa 10-15 % gefordert, normale textile Anwendungen sind auf Fasermaterialien mit einer Dehnung von ca. 20-40% eingestellt, für spezielle Anwendungen, z.B. zur Herstellung dreidimensional verformbarer textiler Flächengebilde, sind Garne mit möglichst hoher Dehnbarkeit, beispielsweise bis zu 200%, erwünscht.
Der Schrumpf der Fasermaterialien wird für übliche textile Anwendungen auf Werte unter 10 % eingestellt, für die Herstellung von Stapelfaservliesen z.B. auf < 5%. Es können jedoch auch ausgesprochene Hochschrumpf-Fasern für spezielle Anwendungen, z.B. zur Verdichtung oder Kräuseln von textilen Flächengebilden von Interesse sein.

Die erfindungsgemäßen Elektretfasern können einen Präparationsauftrag von 0 bis 0, 3 Gew.-%, vorzugsweise 0 bis 0,15 Gew.%, aufweisen. Eine bevorzugte Ausführungsform präparierter erfindungsgemäßer Elektretfasern besteht darin, daß sie eine hydrophobe Präparation aufweisen, insbesondere eine solche, die als hydrophobierendes Agenz Wachs, ein Fluortensid und/oder ein Fluorpolymer wie z.B. Polytetrafluorethylen, enthält.

Wie oben bereits angedeutet können die erfindungsgemäßen Elektretfasern in verschiedenen Formen als lineare oder flächenförmige Gebilde vorliegen. Insbesondere können sie in Form von Multifilamentgarnen, Kabel und Vliesen vorliegen.

Die erfindungsgemäßen Multifilamentgarne haben je nach geplantem Einsatz in der Regel Titer von 20 bis 500 dtex und 10 bis 200 Kapillaren und weisen im wesentlichen die oben angegebenen textiltechnischen Werte der erfindungsgemäßen Elektretfasern auf. Selbstverständlich können die Garne auch als Mischgarne mit anderen synthetischen aber auch natürlichen Fasern vorliegen, wobei sich die Nicht-Elektretfasern nicht nur bezüglich ihrer elektrischen Eigenschaften, sondern auch bezüglich ihrer üblichen textiltechnischen Eigenschaften, wie Reißfestigkeit, Reißdehnung, Schrumpfverhalten u.s.w. von der erfindungsgemäßen Elektretfasern unterscheiden können.
Dies ist insbesondere dann von Bedeutung, wenn Spezialeffekte, wie z. B. Hochbauscheffekte, Schlingengarn-Effekte, Kern-Mantel-Strukturen u.dgl. erzeugt werden sollen, oder wenn die Garne Schmelzfasern enthalten sollen, damit sie sich bei einer Erhitzung versteifen.

Kabel sind Multifilamentstränge mit einigen Tausend bis einigen Millionen Einzelkapillaren, wobei die Auswahl innerhalb dieses Bereichs im Hinblick auf die geplante Endanwendung erfolgt.

In Form von Kabeln können die erfindungsgemäßen Elektretfasern den weiteren Be- und Verarbeitungsstufen, z.B der Kräuselung, der Verstreckung, der Fixierung, der Ausrüstung, der Färbung u.s.w. zugeführt werden.
Auch können die erfindungsgemäßen Elektretfasern in Form von Kabeln leicht gelagert werden.

Die Vliese aus den erfindungsgemäßen Elektretfasern stellen eine besonders wertvolle Form dieser Fasern dar. Sie werden im Einzelnen weiter unten beschrieben. Ihr Hauptanwendungsgebiet liegt in der Herstellung von Feinstaubfiltern.

Die erfindungsgemäßen Elektretfasern können selbstverständlich auch in Kombination mit einem Nichtelektret-Material als Zweikomponentenfasern vorliegen.
Dabei können sie beispielsweise als Bikomponentenfaser mit Kern/Mantel-Struktur mit einem Kern aus Elektretwerkstoff der im Anspruch 1 angegebenen Zusammensetzung und einem Mantel aus niedrieger schmelzendem Polymermaterial vorliegen.
Derartige Fasern können mit besonderem Vorteil zur Herstellung von Endlos- oder Stapelfaservliesen, die durch Erwärmen gebondet werden können, eingesetzt werden.

Die erfindunggemäßen Elektretfasern können auch als Bikomponentenfaser mit Kern/Mantel-Struktur mit einem Kern aus Normalfaser-Werkstoff, d.h. einem beliebigen spinnfähigen Polymermaterial, und einem Mantel aus Elektretwerkstoff der oben angegebenen Zusammensetzung vorliegen.

Die erfindungsgemäßen Elektretfasern können auch mit anderen Fasermaterialien, z.B. mit Effektgarnen oder Schmelzfasern gemeinsam zu Vliesstoffen verarbeitet werden oder zu Mischgarnen, z.B. Commingel-Garn versponnen oder verblasen werden.

Die vorliegende Erfindung betrifft auch ein Verfahren zur Herstellung der erfindungsgemäßen Elektretfasern durch Verspinnen eines fadenbildenden Werkstoffs aus der Schmelze oder aus einer Lösung in einem geeigneten

Lösemittel, wobei in an sich bekannten Weise nach dem Nassspinn- oder dem Trockenspinnverfahren gearbeitet werden kann, erforderlichenfalls Abkühlung der ersponnenen Filamente, Abziehen mit einer Geschwindigkeit im Bereich von etwa 100 bis 8000 m/min, vorzugsweise von 1000 bis 5000 m/min und daran anschließenden weiteren, üblichen Verfahrensschritten, wie erforderlichenfalls Verstreckung und je nach dem vorgesehenen weiteren Einsatz Wirrablage, Zusammenfassung zu Garnen oder Kabeln, Texturierung, Fixierung, Schnitt zu Stapelfasern, das dadurch gekennzeichnet ist, daß ein Werkstoff versponnen wird, der überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, organischer oder metallorganischer Ladungssteuermittel enthält.

Alternativ betrifft die Erfindung auch ein Verfahren zur Herstellung der erfindungsgemäßen Elektretfasern durch Spalten von spaltbaren multilobalen Fasern, die längs der Faserachse sich erstreckende Segmente aus dem Elektretwerkstoff enthalten oder durch Matrixauflösung eines "Island in the Sea"- Filaments dessen Inselbereiche aus dem Elektretwerkstoff bestehen, oder durch Spalten einer Folie aus dem Elektretwerkstoff, das ebenfalls dadurch gekennzeichnet ist, daß der Elektretwerkstoff überwiegend ein fadenbildendes Polymerisat oder Polykondensat und 0,01 bis 30 Gew. -% (vorzugsweise 0,01 bis 10, insbesondere 0,1 bis 5 Gew.-%), bezogen auf das Gewicht des Werkstoffs, organischer oder metallorganischer Ladungssteuermittel enthält.

Als weitere Alternativen zur Herstellung der erfindungsgemäßen Elektretfasern kommen in Betracht das Faser-Blasverfahren, wie es in der Deutschen Patentanmeldung 19 64 060 beschrieben ist oder das "Flash - Spinnen" im elektrostatischen Feld, wie es in der US-Patentschrift 3 319 309 beschrieben ist, jeweils unter Einsatz des erfindungsgemäß einzusetzenden Elektret-Werkstoffs.

Beim Schmelzspinnen wird der Elektret-Werkstoff auf eine Temperatur von etwa 30-50 °C über dem Schmelzpunkt des Polymers erwärmt und die Schmelze in üblicher Weise durch Spinndüsen extrudiert. Die Temperatur der Schmelze wird innerhalb des angegebenen Bereichs so gewählt, daß sich ein optimaler Fluß des Werkstoffs einstellt der bei nicht zu hohem Spinndruck die für die Orientierung der Filamente erforderlichen Scherkräfte aufzubauen gestattet.

Beispielsweise wird ein Werkstoff, der überwiegend aus Polypropylen besteht, bei etwa 260 °C, ein Werkstoff auf Basis Polyester bei ca. 280-310 °C versponnen.

Wird das Polymer aus der Schmelze versponnen, so müssen die aus den Spinnöffnungen abgezogenen Filamente durch Abkühlung verfestigt werden. Die Abkühlung kann in jeder bekannten Weise ausgeführt werden und ermöglicht auch bei der Verarbeitung des Elektretwerkstoffs die gezielte Steuerung der Filamenteigenschaften. So ist z.B eine Verzögerung der Abkühlung durch einen Rechauffeur möglich, wenn Fasern mit einer speziellen Schrumpf/Festigkeitscharakteristik hergestellt werden sollen oder es kann eine scharfe asymmetrische Anblasung erfolgen wenn selbstkräuselnde Fasern hergestellt werden sollen. Insbesondere für die Herstellung feiner Einzeltiter unter 1 dtex empfiehlt sich dagegen eine sog. Zentralanblasung, die eine besonders gleichmäßige und damit spannungsfreie Abkühlung der Filamente gewährleistet.

Das Erspinnen der erfindungsgemäßen Elektretfasern aus Lösungen des Werkstoffs in einem geeigneten Lösemittel erfolgt ebenfalls nach gut bekannten Verfahren. Dabei können prinzipiell die gleichen Bedingungen gewählt werden wie bei Normal-Polymeren. Die Verfestigung der aus der Spinndüse austretenden Lösung kann, beim Trokkenspinnen, durch Verdampfen des Lösemittels oder, beim Naßspinnen, durch Ausfällung des Werkstoffs in Fadenform in einem Fällbad erfolgen.

Hierbei ergeben sich Vorteile insbesondere hinsichtlich der Werkstoffzusammensetzung. Es können dann nämlich auch solche Werkstoffe eingesetzt werden, die ein Ladungssteuermittel enthalten, welches bei der Schmelztemperatur des Polymermaterials nicht beständig ist.

Bei den genannten Spinnverfahren können außer Spinndüsen mit runden Spinnöffnungen auch solche mit Profilöffnungen eingesetzt werden und es können durch an sich bekannte Spezialanordnungen oder -Gestaltungen der Öffnungen Mehrkomponentenfilamente in Seite an Seite - Anordnung oder vom Kern-Mantel-Typ ersponnen werden.

Spinnabzugsgeschwindigkeite herab bis zu 100 m/min werden hauptsächlich zur Herstellung von Titern oberhalb 4 dtex benutzt. Wirtschaftlich interessanter sind Spinnabzugsgeschwindigkeiten zwischen 1000 und 5000 m/min, wobei insbesondere sehr feine Titer bei den höchsten Geschwindigkeiten dieses Bereichs ersponnen werden.

Die Herstellung des erfindungsgemäß zu verspinnenden Werkstoffs geschieht durch homogenes Einarbeiten der Ladungssteuermittel in das Polymermaterial aus dem der Werkstoff überwiegend besteht. Besonders vorteilhaft ist es dabei, das Ladungssteuermittel in Form eines Masterbatch einzusetzen.

Die ersponnenen Filamente werden in der Regel einer Verstreckung unterworfen, deren Ausmaß einerseits von der Spinnorientierung der Filamente, andererseits von den gewünschten Festigkeits und Dehnbarkeitseigenschaften bestimmt wird. Während Filamente die bei Spinngeschwindigkeiten unter 1000 m/min erhalten wurden einer kräftigen Verstreckung bedürfen, wenn sie zu textilen Garnen oder Flächengebilden verarbeitet werden sollen, nimmt das Ausmaß der erforderlichen Verstreckung mit steigender Spinngeschwindigkeit stetig ab, da diese Filamente schon eine relativ hohe Spinnorientierung aufweisen.

Feinsttiter, die bei den höchsten Geschwindigkeiten dieses Bereichs ersponnen werden, stellen daher vollorientierte Filamente (so. FOY) dar und bedürfen keiner Nachverstreckung.

Sollen hochfeste Filamente hergestellt werden, so ist eine Verstreckung bis auf eine Reißdehnung von ca. 10 % und darunter üblich, für besonders dehnbare Filamente, z.B. zur Herstellung von tiefziehfähigen Flächengebilden, ist die Verstreckung nur gering und wird so bemessen, daß sich Reißdehnungen von bis zu 200 % ergeben.
Die Filamente können der Verstreckung entweder in Form von Multifilamentgarnen oder in Form von Kabeln unterworfen werden.

Die zur Verstreckung erforderliche Fadenspannung kann durch Galetten oder aber durch Verstreckdüsen oder Streckschächte erzeugt werden. Während Galetten die Filamente bzw. Garne durch Reibung an der drehenden Galettenoberfläche mitziehen, werden in Verstreckdüsen oder Streckschächten die Filamente durch einen starken Luftstrom mitgerissen.
Eine besondere Bedeutung kommt den Streckschächten bei der Wirrablage von Filamentmaterial zur Herstellung von Wirrvliesen, insbesondere von "Spunbonds" zu.

Die Verstreckung kann bei Raumtemperatur oder bei erhöhter Temperatur, insbesondere oberhalb des Glasübergangspunktes ausgeführt werden. Eine sog. Kaltverstreckung führt in der Regel zu speziellen hochschrumpfenden Filamenten, die Heißverstreckung führt zu Filamenten, die übliche textiltechnisch zweckmäßige Schrumpfwerte von 0 bis 10 % aufweisen.
Die Verstreckung der Filamentmaterialien kann in bekannte Weise ein oder mehrstufig erfolgen.

Die erfindungsgemäßen Elektretfasern können auch mit allen bekannten Texturierungen versehen werden. So ist es möglich, die Filamente, vorzugsweise in Kabelform, einer Stauchkammerkräuselung zu unterwerfen; sie können bei Vorliegen feinerer Faserbündel durch Verwirbelungsdüsen mit oder ohne Überfütterung eines Teils der zugeführten Fasern zu mehr oder weniger geschlossenen Garnen oder auch zu Effektgarnen oder auch zu Schlingengarnen verwirbelt werden oder sie können der Falschdrahttexturierung oder auch der Streck-Falschdrahttexturierung unterworfen werden.
Weitere textiltechnische Ausgestaltungen der Multifilamentgarne ergeben sich wenn die erfindungsgemäßen Elektretfasern in Kombination mit Fasern unterschiedlichen Schrumpfs zu Bikomponentengarnen versponnen werden, bei denen die Auslösung des Schrumpfs zu einer spontanen Kräuselung führt.
Auch die bereits oben erwähnten Seite-an-Seite Bikomponentenfasern mit einem Elektretanteil können bei Wahl einer Komponente mit einer von dem Elektretmaterial unterschiedlichen Schrumpfcharakteristik durch Auslösung des Schrumpfs gekräuselt werden.

Eine besonders bevorzugte Form für die erfindungsgemäßen Elektretfasern ist, wie bereits oben gesagt, die Form von Vliesen.
Diese Vliese können nämlich mit besonderem Vorteil zur Herstellung hochwirksamer und besonders langlebiger Staubfilter, insbesondere von Feinstaubfiltern, eingesetzt werden.

Überraschenderweise wurde gefunden, daß es gelingt, hohe textiltechnische Eigenschaften, insbesondere Stabilität und eine sehr variable Konstruktion mit einer sehr beachtlichen Verlängerung der Halbwertszeit der elektrischen Ladung zu kombinieren, wenn das Fasermaterial des Vliesstoffs erfindungsgemäße Elektretfasern enthält oder daraus besteht.

Ein Gegenstand der vorliegenden Erfindung ist somit ein Vliesstoff, der aus Synthesefasern besteht oder solche enthält, wobei dieser Vliesstoff zumindest zum Teil aus erfindungsgemäßen Elektretfasern aufgebaut ist.

Der Anteil der Elektretfasern im Vliesstoff, der diesem die gewünschte Eigenschaftskombination vermittelt, kann u.U. überraschend klein sein.
Oft ergibt sich ein merklicher wirtschaftlicher und technischer Vorteil bereits bei einem Vliesstoff, der mindestens 10 % Elektretfasern enthält.
In der Regel ist es zweckmäßig, einen Vliesstoff einzusetzen, der 50 - 100 % Elektretfasern enthält, wobei die höchsten technischen Anforderungsprofile naturgemäß mit Vliesstoffen erfüllt werden können, die zu 100 % aus Elektretfasern bestehen.

Die Titer der Synthesefasern der erfindungsgemäßen Vliesstoffe und der ggf. daraus hergestellten Erzeugnisse, insbesondere der Staubfilter, liegen in dem für diese Anwendungen üblichen Bereich.

Von Fall zu Fall kann es zweckmäßig sein, Mischtiter einzusetzen, insbesondere können bei solchen Vliesstoffen, die nicht zu 100 % aus Elektretfasern bestehen, Elektretfasern und Normalfasern verschiedene Titer haben.

Die Synthesefasern können Endlosfasern oder Stapelfasern, zweckmäßigerweise mit Stapellängen von 0,2 - 200 mm, sein.
Dabei liegen Vliese aus Endlosfasern vorzugsweise in Form von Spunbonds vor, Stapelfasern mit Stapellängen unter 20 mm werden zweckmäßigerweise durch Naßlegeverfahren, Stapelfasern mit Stapellängen über 20 mm zweckmäßigerweise durch Kardieren zu Vliesen verarbeitet.
Es ist jedoch auch ohne weiteres möglich, Vliesstoffe einzusetzen, die sowohl Endlos- als auch Stapelfasern enthalten. So läßt sich z.B. in vielen Fällen die gewünschte Eigenschaftskombination eines Filamentvliesstoffes (ein solcher

besteht aus Endlosfilamenten) durch Einmischen eines geeigneten Anteils von Elektret-Stapelfasern einstellen. Weiterhin kann es zweckmäßig sein Vliese herzustellen aus Mischungen von zwei oder mehreren Sorten erfindungsgemäßen Elektretfasern, wobei jede Sorte ein anderes der oben genannten Ladungssteuermittel enthält.
Selbstverständlich können auch Mischungen von Elektret-Stapelfasern und normalen Stapelfasern zu einem Spinnfaservlies in Wirrlage abgelegt werden.

Diese Ablage kann, wie üblich, durch trockenes oder nasses Ablegen erfolgen. Das Trockenlegen der Stapelfasern erfolgt in der Regel auf der Krempel, die Ablage von Endlosfasern nach dem Spunbondverfahren unmittelbar nach dem Ausspinnen. Dabei können die ersponnenen Filamente noch einen Streckschacht durchlaufen, in dem sie verstreckt werden und auf eine für die Ablage auf dem laufenden Sieb vorteilhafte Geschwindigkeit beschleunigt werden. Eine Verfestigung der Spunbonds erfolgt in der Regel durch eine Kalanderpassage der frisch abgelegten Filamentmasse.

Die geeigneten Synthesefasern bestehen im allgemeinen aus den oben angegebenen spinnfähigen Polymeren, insbesondere aus Polyamid, Polyacrylnitril, Polyethylen, Polypropylen oder Polyester.
Bevorzugt sind Synthesefasern aus Polyester, insbesondere aus Polyethylenterephthalat, und aus Polypropylen.

Die Verfestigung der Vliesstoffe kann prinzipiell in jeder bekannten Weise erfolgen. So ist es beispielsweise möglich, das Vlies durch einen Binder zu verfestigen mit dem das Vlies imprägniert wird und der anschließend ausgehärtet wird oder der Binder kann ein Schmelzbinder sein, der z.B. in Pulverform oder in Form von Binderfäden in das Vlies eingearbeitet wird, und der das Vlies unter Wärmeeinwirkung zum Vliesstoff verfestigt.
Die Verfestigung des Vlieses zum Vliesstoff kann auch durch Kalandrierung erfolgen, wobei teils eine mechanische Verfilzung der Filamente, teils eine autogene Verschweißung an den Kreuzungspunkten eintritt.
Das Schmelzkleber-Material kann selbstverständlich auch als eine Komponente einer Seite-an-Seite Bikomponentenfaser oder als Mantel einer Kern-Mantel-Bikomponentenfaser in das Vlies eingebracht werden.
Als vorteilhaft haben sich erfindungsgemäße Vliesstoffe erwiesen, die mechanisch verfestigt worden ist. Unter einer mechanischen Verfestigung ist zum Beispiel das Nadeln zu verstehen oder auch z.B. hydromechanische Verfestigung, wie sie z.B. in der EP-A-0 108 621 beschrieben ist.
Eine Kombination der verschiedenen Verfestigungsarten kann nach Bedarf ebenfalls erfolgen.

Das Flächengewicht der erfindungsgemäßen Vliesstoffe richtet sich natürlich nach dem geplanten Einsatz. In der Regel liegt es bei 5 bis 300 g/m$^2$, vorzugsweise bei 100 bis 250 g/m$^2$, kann aber für besondere Aufgaben auch darüber z.B. bei bis zu 1000 g/m$^2$ liegen.

Weitere bevorzugte Ausführungsformen des erfindungsgemäßen Vliesstoffs sind ein Spunbond, insbesondere ein durch Nadeln oder Schmelzkleber verfestigtes Spunbond oder auch ein trocken oder nassgelegter durch Schmelzkleber verfestigter Stapelfaservliesstoff.

Gegebenenfalls kann der Vliesstoff auch mit einem anderen Textilmaterial z.B. einem weiteren Vliesstoff oder einem Textilmaterial definierter Garnlage, das ebenfalls aus Elektretfasern bestehen oder solche enthalten kann, kombiniert werden.
Insbesondere ist gelegentlich die Kombination mit stützenden und verstärkenden oder auch schützend abdeckenden Textilmaterialien erwünscht. In einer bevorzugten Ausführungsform werden die erfindungsgemäßen elektretfaserhaltigen Vliese ein- oder insbesondere beidseitig mit einem schützenden Textilmaterial, z.B. einem Vliesstoff, insbesondere einem Feinvlies abgedeckt. Insbesondere beim Einsatz der erfindungsgemäßen Vliese als Staubfilter ist oft die Kombination mit Grob- oder Tiefenfiltern zweckmäßig.

Die vorliegende Erfindung betrifft auch ein Verfahren zur Herstellung der erfindungsgemäßen Vliesstoffe durch Wirrablage von synthetischen Endlos- oder Stapelfasern in an sich bekannter Weise (Vergl.: "Radko Krcema, Handbuch der Textilverbundstoffe", Deutscher Fachverlag GmbH (1970), Seite 53) auf einer bewegten Unterlage, oder durch Vliesbildung aus Stapelfasern auf der Krempel oder Karde, anschließende Verfestigung, das dadurch gekennzeichnet ist, daß zumindest ein Teil der abgelegten Synthesefasern Elektretfasern sind.

Bei der Herstellung von Spinnfaservliesstoffen, die erfindungsgemäß einen Anteil von Elektretfasern enthalten, kann eine Mischung von Elektretfasern und normalen Stapelfasern im gewünschten Mischungsverhältnis in an sich bekannter Weise trocken oder nach einem Naßlegeverfahren zum Vlies abgelegt und anschließend verfestigt werden.
Es ist aber auch möglich, Vliesstoffe aus endlosen Fasern und Stapelfasern zu erzeugen, indem man bei der Ablage der Endlosfasern eine Beimischung der Stapelfasern vorsieht. In diesem Fall können wahlweise die Endlosfasern oder die Stapelfasern ganz oder teilweise aus Elektretfasern bestehen.
Auch bei der Herstellung der Vliesstoffe nach dem Spunbondprozess ist es möglich, Normalfasern und Elektretfasern bei der Ablage zu mischen. Hierzu können beispielsweise die Elektretfasern gesondert hergestellt werden und aus Faserreservoirs, z.B. Spulengestellen, abgezogen und durch Blasdüsen in den auf die Ablage gerichteten Faserstrom der Normalfasern eingespeist werden, oder die Spinnbalken, die zur Erzeugung der Vliesfilamente dienen, können neben Spinnöffnungen für Normalfasern auch Spinnöffnungen für Elektretfasern aufweisen, wobei das Verhältnis der verschiedenen Spinnöffnungen und die Menge der daraus ersponnenen Filamente dem angestrebten Verhältnis von

Normal- und Elektretfasern im Vliesstoff entspricht.

In der Regel werden zur Herstellung erfindungsgemäßer Vliesstoffe mindestens 10 Gew.-% Elektretfasern abgelegt oder eine Fasermischung, die mindestens 10 Gew.-% Elektretfasern enthält auf der Krempel oder Karde zum Vlies verarbeitet.

Vorzugsweise beträgt der Anteil der abgelegten Elektretfasern 50 bis 100%, und zur Erzielung der maximalen Effekte sind 75 bis 100 % der abgelegten Fasern Elektretfasern.

Die Verfestigung des Vlieses zum Vliesstoff erfolgt in an sich bekannter Weise unter Einsatz eines Binders, oder eines Schmelzbinders oder durch Kalandrieren oder, vorzugsweise, auf mechanischem Wege. Es ist jedoch auch möglich, verschiedene dieser Verfestigungsverfahren miteinander zu kombinieren.

Binder können z. B. Polymerlösungen oder -Dispersionen oder Latices sein, die auf das Vlies durch Imprägnieren oder Aufsprühen appliziert werden und die nach dem Verdampfen der flüssigen Phase an den Kreuzungspunkten der Filamente "Bindesegel" ausbilden.

Es können aber auch Duroplastbinder eingesetzt werden, die, ggf. bei einer Wärmebehandlung, aushärten und die Faserkreuzungspunkte fixieren. Auch Schmelzbinder, die z.B. in Form von Pulvern oder vorzugsweise in Form von Binderfasern dem Vlies einverleibt werden, und die beim Erwärmen des Vlieses über ihren Schmelzpunkt an den Faserkreuzungspunkten zusammenlaufen und Bindepunkte ausbilden, die nach dem Wiederabkühlen das Vlies zum Vliesstoff verfestigen, können mit gutem Erfolg eingesetzt werden.

Eine ähnliche Verfestigung läßt sich durch das "autogene" Verschweißen der Vliesfilamente an ihren Kreuzungspunkten erzielen, wenn man das Vlies einer Kalandrierung in der Nähe der Schmelztemperatur der Vliesfilamente unterwirft.

Gute Ergebnisse ergibt auch eine mechanische Verfestigung z.B. durch Nadeln oder durch hydromechanische Verfestigung, wie sie beispielsweise in der EP-A-0 108 621 beschrieben ist. Hierbei tritt keinerlei chemische oder thermische Belastung des Filamentmaterials ein, sodaß die vorteilhaften physikalischen Eigenschaften die den Filamenten aufgrund ihrer Herstellung, z.B. durch Schnellspinnen und Verstreckoperationen vermittelt werden, ungeschmälert auf den Vliesstoff übertragen werden.

Zur Herstellung einer Kombination eines erfindungsgemäßen Vliesstoffs mit einem Textilmaterial definierter Garnlage ist der Vliesstoff mit diesem Textilmaterial so zu verbinden, daß keine Delaminierung eintreten kann. Diese Forderung läßt sich am besten erfüllen, wenn die Verbindung der Komponenten durch Nadeln, Kleben oder Nähen erfolgt.

Besonders bevorzugt ist die Herstellung derartiger Verbundstoffe durch Schusslegerascheltechnik.

Hierbei handelt es sich um eine Kettwirktechnik, bei der der Vliesstoff richtungsorientiert durch Garne, vorzugsweise hochfeste Garne mit oder ohne Elektretfaseranteil oder aus Elektretfasern, verstärkt ist. Diese Kettwirktechnik wird auf sogenannten Raschelmaschinen durchgeführt. Eine besonders geeignete Raschelmaschine zur Herstellung eines erfindungsgemäß ausgebildeten Verbundstoffes ist die vom Typ RS 3 MSU-V der Firma Karl Mayer, Textilmaschinenfabrik GmbH, Obertshausen.

Die Vliese, welche aus den erfindungsgemäßen Elektretfasern bestehen oder einen wirksamen Anteil an solchen enthalten, werden - wie bereits oben gesagt - mit besonderem Vorteil zur Herstellung von Feinststoffiltern benutzt.

Ein Gegenstand der vorliegenden Erfindung ist daher auch diese Anwendung der Elektretfasern und der sie enthaltenden Textilmaterialien insbesondere Vliesstoffe.

Aus herstellungstechnischen Gründen kann es vorteilhaft sein, die Fasern vor der Vliesbildung mit einer antistatischen Präparation zu versehen, die erst am Ende des Herstellprozesses, z.B. nach dem Konfektionieren der Filter, ausgewaschen wird.

Es hat sich hierbei überraschenderweise gezeigt, daß in vielen Fällen bei der Herstellung der Vliese als Antistatikum eine ungwöhnlich stark verdünnte Präparation oder sogar nur Wasser eingesetzt werden kann. Diese Ausführungsform des Herstellungsprozesses ist besonders umweltverträglich.

Anschließend werden die Filter dann gezielt, z.B. in einer Coronaentladung, elektrostatisch aufgeladen.

Im übrigen hat es sich überraschenderweise gezeigt, daß bei der Herstellung der Vliese aus den erfindungsgemäßen Elektretfasern auf der Krempel oder bei ihrem Einsatz als Filter aufgrund der Durchströmung mit Gasen durch triboelektrische Effekte in den meisten Fällen bereits eine ausreichende elektrische Aufladung der Vliese erfolgt, sodaß eine gesonderter Aufladungsschritt entfallen kann.

Die folgenden Ausführungsbeispiele veranschaulichen die Ausführung der vorliegenden Erfindung.

Beispiel 1

Polyethylenterephthalat-Faserrohstoff wurde erfindungsgemäß modifiziert durch Vermischen mit soviel des Ladungssteuermittels C.I. Solvent Blue 124 in Form eines Masterbatches, daß die Konzentration des Solvent Blue 124 in der Spinnware 0,5 Gew.-% betrug. Dabei wurde das Masterbatch aus der hochkristallinen Form des Ladungssteuermittels hergestellt, deren Röntgendiagramm (Cu-K-alpha-Strahlung) einen starken Reflex bei 2 $\delta°$ = 18,47, drei mittelstarke Reflexe bei 2 $\delta°$ = 6,97; 12,1 und 13,9 und schwache breite Reflexe bei 2 $\delta°$ = 20,0; 21,7; 22,5; 24,8; 28,2; 30,7 und 32,2 aufweist.

Der so hergestellte Werkstoff wurde nach konventioneller Schmelzspinntechnologie versponnen. Die Spinntemperatur betrug 285 °C, die Spinnabzugsgeschwindigkeit lag bei 1500 m/min.

Die produzierte Spinnware wurde nach ebenfalls konventioneller Bandstraßentechnologie (Stauchkammerkräuselung, Fixierung und Schnitt) zu wollähnlichen, erfindungsgemäß modifizierten Stapelfasern mit einem Einzeltiter von 1,3 dtex verarbeitet.

Aus den hergestellten modifizierten Stapelfasern sowie aus Mischungen dieser Fasern mit Normalfasern (Titer der Normalfasern ebenfalls 1,3 dtex) und jeweils 20 Gew.-% Bindefasern (Typ: Bikomponentenfaser Polyester/Co-polyester in Kern/Mantelaufbau mit einem Mantelschmelzpunkt von 110 °C, Titer 3 dtex) in den unten angegebenen Zusammensetzungen wurden auf einer Versuchskrempel Vliese hergestellt. Variiert wurde dabei das Flächengewicht (m) der Vliese und der Anteil der Normalfasern. Die Vliesverfestigung erfolgte thermisch bei 160 °C und einer Verweilzeit von 3 Minuten.

Die Abscheideleistung der hergestellten Vliese wurden in einem konventionellen Filterprüfstand, der nach dem Prinzip der Streulichtmessung arbeitet, geprüft.
Dabei wurden folgende Prüfparameter eingestellt:

Anströmgeschwindigkeit: 20 cm/s, wobei sich jeweils die unten angegebene Druckdifferenz DD ergab,
Partikelmassenkonzentration: 50 mg/m$^3$,
Bestaubungszeit: variiert von 1 bis 3 Minuten,
Teststaub: "ac fine" mit folgender Zusammensetzung:

| Partikelgröße | Teilchen-Anteil [%] |
|---|---|
| 0,3 - 0,5 µm | 55,5 |
| 0,5 - 1,0 µm | 17,3 |
| 1,0 - 3,0 µm | 26,6 |
| 3,0 - 5,0 µm | 0,5 |
| > 5,0 µm | nicht relevant |

Muster 1:

m = 200 g/m$^2$ ;
DD = 23 Pa;
80 Gew.-% erfindungsgemäß modifizierte Fasern;
20 Gew.-% Bikomponenten-Bindefasern

Muster 2:

m = 200 g/m$^2$ ;
DD = 26 Pa;
40 Gew.-% erfindungsgemäß modifizierte Fasern;
40 Gew.-% Normalfasern
20 Gew.-% Bikomponenten-Bindefasern

Muster 3:

m = 200 g/m$^2$ ;
DD = 25 Pa;
80 Gew.-% Normalfasern

20 Gew.-% Bikomponenten-Bindefasern

Muster 4:

m = 100 g/m$^2$ ;
DD = 10 Pa;
80 Gew.-% erfindungsgemäß modifizierte Fasern;
20 Gew.-% Bikomponenten-Bindefasern

Muster 5:

m = 100 g/m$^2$ ;
DD = 10 Pa;
80 Gew.-% Normalfasern
20 Gew.-% Bikomponenten-Bindefasern

Die mit diesen Vliesmustern erzielten Abscheideleistungen sind den folgenden Tabellen zu entnehmen:

Tabelle 1

| Trenngrade der Muster 1 bis 5 nach einer Bestaubungszeit von 1 Minute. | | | | | |
|---|---|---|---|---|---|
| Partikelgröße x [µm] | Trenngrad T(x) der Muster | | | | |
| | 1 | 2 | 3 | 4 | 5 |
| 0,3 | 0,81 | 0,71 | 0,62 | 0,64 | 0,44 |
| 0,5 | 0,85 | 0,77 | 0,70 | 0,71 | 0,52 |
| 1,0 | 0,89 | 0,82 | 0,77 | 0,77 | 0,61 |
| 3,0 | 0,96 | 0,95 | 0,93 | 0,90 | 0,82 |
| 5,0 | 0,98 | 0,98 | 0,99 | 0,94 | 0,94 |

Tabelle 2

| Trenngrade der Muster 1 bis 3 nach einer Bestaubungszeit von 2 Minuten. | | | |
|---|---|---|---|
| Partikelgröße x [µm] | Trenngrad T(x) der Muster | | |
| | 1 | 2 | 3 |
| 0,3 | 0,81 | 0,74 | 0,64 |
| 0,5 | 0,86 | 0,80 | 0,72 |
| 1,0 | 0,90 | 0,86 | 0,79 |
| 3,0 | 0,97 | 0,97 | 0,94 |
| 5,0 | 0,99 | 0,99 | 0,98 |

Tabelle 3

| Trenngrade der Muster 1 bis 3 nach einer Bestaubungszeit von 3 Minuten. | | | |
|---|---|---|---|
| Partikelgröße x [µm] | Trenngrad T(x) der Muster | | |
| | 1 | 2 | 3 |
| 0,3 | 0,81 | 0,77 | 0,65 |

Tabelle 3 (fortgesetzt)

| Trenngrade der Muster 1 bis 3 nach einer Bestaubungszeit von 3 Minuten. | | | |
|---|---|---|---|
| Partikelgröße x [µm] | Trenngrad T(x) der Muster | | |
| | 1 | 2 | 3 |
| 0,5 | 0,86 | 0,82 | 0,73 |
| 1,0 | 0,90 | 0,87 | 0,81 |
| 3,0 | 0,98 | 0,97 | 0,95 |
| 5,0 | 1,00 | 1,00 | 0,99 |

Beispiel 2

Wie im Beispiel 1 wurde Polyethylenterephthalat-Faserrohstoff erfindungsgemäß modifiziert mit dem Ladungssteuermittel C.I. Solvent Blue 124. Die Mischung erfolgte wie im Beispiel 1, wobei hier jedoch soviel des Masterbatches eingesetzt wurde, daß die Konzentration des Solvent Blue 124 in der Spinnware 1,0 Gew.-% betrug. Dabei wurde auch hier wieder die im Beispiel 1 eingesetzte, hochkristalline Form des Ladungssteuermittels verwendet.
Analog Beispiel 1 wurde der so erhaltene Werkstoff versponnen, wobei in diesem Fall ein Titer von 1,7 dtex hergestellt wurde.
Aus dem Fasermaterial wurde, wie in Beispiel 1 beschrieben, ein Vlies mit einem Flächengewicht von 200 $g/m^2$ und einem Bindefaseranteil von 20 Gew.-% (Bikomponentenfaser wie in Beispiel 1) hergestellt und verfestigt.
Das so erhaltene Vlies wird im Folgenden als Muster 6 bezeichnet. Zum Vergleich wurde unter ganz gleichen Spinn- und Vliesbildungsbedingungen ein Vlies aus nicht mit Solvent Blue 124 modifizierten Polyethylenterephthalat hergestellt. Dieses Vlies wird im Folgenden als Muster 7 bezeichnet.
Die Abscheideleistungen dieser beiden Vliesmuster werden in der folgenden Tabelle 4 einander gegenübergestellt.

**Tabelle 4:**

**Trenngrade T(x) der Vlies-Muster 6 (erfindungsgemäß) und 7 (Vergleich) nach einer Bestaubungszeit von 1 bis 10 Minuten.**

| Partikel-Größe x [µm] | | 0,3 | | 0,5 | | 1,0 | | 3,0 | | 5,0 | |
|---|---|---|---|---|---|---|---|---|---|---|---|
| Vlies-Nummer | | 6 | 7 | 6 | 7 | 6 | 7 | 6 | 7 | 6 | 7 |
| Be-stau-bungs-zeit [min.] | 1 | 0,89 | 0,81 | 0,92 | 0,86 | 0,95 | 0,89 | 0,98 | 0,95 | 1,00 | 0.98 |
| | 2 | 0,88 | 0,78 | 0,91 | 0,84 | 0,94 | 0,88 | 0,98 | 0,96 | 0,99 | 0,99 |
| | 3 | 0,92 | 0,80 | 0,95 | 0,86 | 0,96 | 0,90 | 0,99 | 0,97 | 1,0 | 0,99 |
| | 4 | 0,92 | 0,78 | 0,94 | 0,85 | 0,96 | 0,89 | 0,99 | 0,96 | 1,00 | 0,99 |
| | 5 | 0,91 | 0,76 | 0,94 | 0,83 | 0,96 | 0,87 | 0,99 | 0,96 | 0,99 | 0,99 |
| | 6 | 0,90 | 0,74 | 0,94 | 0,82 | 0,95 | 0,86 | 0,99 | 0,95 | 1,00 | 0,98 |
| | 7 | 0,90 | 0,72 | 0,93 | 0,80 | 0,95 | 0,85 | 0,99 | 0,95 | 1,00 | 0,98 |
| | 8 | 0.89 | 0,70 | 0,93 | 0,78 | 0,95 | 0,84 | 0,98 | 0,95 | 1,00 | 0,98 |
| | 9 | 0,88 | 0,68 | 0,92 | 0,76 | 0,94 | 0,83 | 0,99 | 0,95 | 1,00 | 0,98 |
| | 10 | 0,87 | 0,66 | 0,91 | 0,75 | 0,93 | 0,82 | 0,99 | 0,94 | 1,00 | 1,00 |

Die Tabelle 4 zeigt besonders deutlich die erhebliche Verbesserung der Abscheideleistung für Feinstäube nach längerer Bestaubungszeit, die durch den Einsatz des erfindungsgemäßen Vliesmaterials erzielt wird.

Die folgende Tabelle 5 zeigt, daß das erfindungsgemäße Vliesmaterial überraschenderweise auch nach einer Entladung durch eine Wasserbehandlung seine sehr guten Abscheideleistungen beibehält ohne daß eine externe Aufladung erfolgen muß.

Tabelle 5:

| Trenngrad T(x) des Vliesmusters 6 nach Eintauchen in Wasser und anschließende Trocknung. | | |
|---|---|---|
| Partikelgröße x [µm] | Trenngrad T(x) des Vliesmusters 6 nach Wasserbehandlung | |
| | Bestaubungszeit: 1 Min. | Bestaubungszeit: 2 Min. |
| 0,3 | 0,87 | 0,86 |
| 0,5 | 0,91 | 0,90 |
| 1,0 | 0,94 | 0,93 |
| 3,0 | 0,98 | 0,98 |
| 5,0 | 1,00 | 1,00 |

**Patentansprüche**

1. Elektretfasern mit verbesserter Ladungsstabilität, **dadurch gekennzeichnet, daß** sie aus einem Werkstoff bestehen, der überwiegend ein fadenbildendes Polymerisat oder Polykondensat und 0,01 bis 30 Gewichtsprozent, vorzugsweise 0,01 bis 10, insbesondere 0,1 bis 5 Gewichtsprozent bezogen auf das Gewicht des Werkstoffes einer kationischen Verbindung, nämlich eine Verbindung der Formel

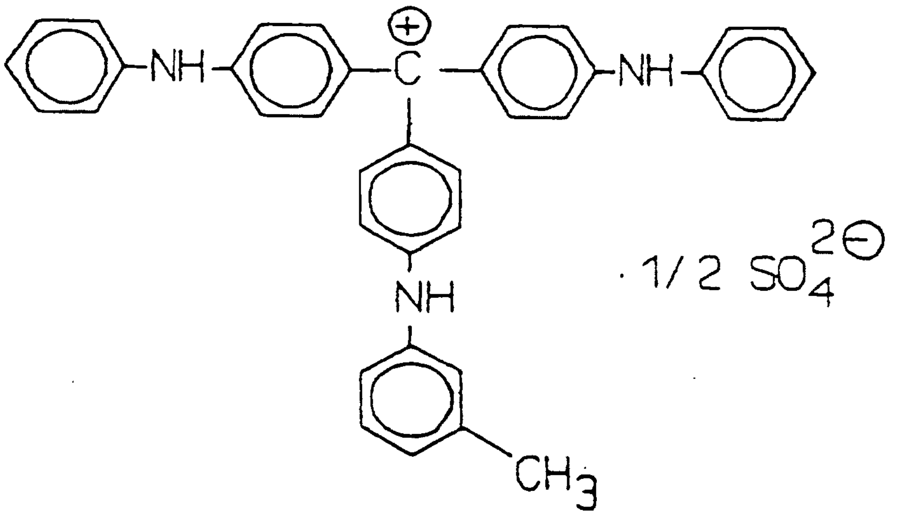

als Ladungssteuermittel enthält,

2. Elektretfasern gemäß Anspruch 1, **dadurch gekennzeichnet, daß** das fadenbildende Polymerisat oder Polykondensat schmelzspinnbar ist.

3. Elektretfasern gemäß Anspruch 1, **dadurch gekennzeichnet, daß** das fadenbildende Polymerisat oder Polykondensat lösungsspinnbar ist.

4. Elektretfasern gemäß mindestens einem der Ansprüche 1 bis 3, **dadurch gekennzeichnet, daß** der Werkstoff überwiegend ein fadenbildendes Polymerisat enthält aus der Gruppe der Polyolefine, der halogenierten Polyolefine, der Polyacrylate, Polyacrylnitril, Polystyrol und Fluorpolymeren.

5. Elektretfasern gemäß mindestens einem der Ansprüche 1 bis 4, **dadurch gekennzeichnet, daß** der Werkstoff überwiegend ein fadenbildendes Polymerisat enthält aus der Gruppe Polyethylen, Polypropylen, Polyacrylnitril, Polytetrafluorethylen und perfluoriertes Ethylen/Propylen-Copolymer.

6. Elektretfasern gemäß Anspruch 5, **dadurch gekennzeichnet, daß** der Werkstoff überwiegend ein fadenbildendes Polymerisat enthält aus der Gruppe Polyethylen und Polypropylen.

7. Elektretfasern gemäß mindestens einem der Ansprüche 1 bis 3, **dadurch gekennzeichnet, daß** der Werkstoff überwiegend ein fadenbildendes Polykondensat enthält aus der Gruppe der Polyester, Polycarbonate, aliphatischen oder aromatischen Polyamide, Polyimide, Polyetherketone (z.B. PEK und PEEK), Polyarylensulfide insbesondere Polyphenylensulfid, Polyacetale und Zelluloseester.

8. Elektretfasern gemäß mindestens einem der Ansprüche 1 bis 3 und 7, **dadurch gekennzeichnet, daß** der Werkstoff überwiegend ein fadenbildendes Polykondensat enthält aus der Gruppe der Polyester, Polyetherketone und Polyphenylensulfid.

9. Elektretfasern gemäß Anspruch 8, **dadurch gekennzeichnet, daß** der Werkstoff überwiegend Polyalkylenterephthalat enthält.

**10.** Elektretfasern gemäß mindestens einem der Ansprüche 1 bis 9, **dadurch gekennzeichnet, daß** der Werkstoff überwiegend Polypropylen enthält.

**11.** Elektretfasern gemäß mindestens einem der Ansprüche 1 bis 10, **dadurch gekennzeichnet, daß** sie einen Titer im Bereich von 0,02 bis 15 dtex haben.

**12.** Elektretfasern gemäß mindestens einem der Ansprüche 1 bis 11, **dadurch gekennzeichnet, daß** die Reißfestigkeit der Fasern 20 bis 80, vorzugsweise 30 bis 65 cN/tex,
die Reißdehnung 10 bis 200 %, vorzugsweise 10 bis 50 %, insbesondere 20 bis 30 %,
der Hitzeschrumpf, gemessen bei 200°C trocken ($S_{200}$), 0 bis 50 %, vorzugsweise < 10 % beträgt.

**13.** Elektretfasern gemäß mindestens einem der Ansprüche 1 bis 12, **dadurch gekennzeichnet, daß** sie einen Präparationsauftrag von 0 bis 0,3 Gew.-%, vorzugsweise 0 bis 0,08 Gew.% aufweisen.

**14.** Elektretfasern gemäß mindestens einem der Ansprüche 1 bis 13, **dadurch gekennzeichnet, daß** sie in Form von Multifilamentgarnen, Kabel und Vliesen vorliegen.

**15.** Elektretfasern gemäß mindestens einem der Ansprüche 1 bis 14, **dadurch gekennzeichnet, daß** sie in Kombination mit einem Nichtelektret-Material als Zweikomponentenfasern vorliegen.

**16.** Elektretfasern gemäß mindestens einem der Ansprüche 1 bis 15, **dadurch gekennzeichnet, daß** sie als Bikomponentenfaser mit Kern/Mantel-Struktur mit einem Kern aus Elektretwerkstoff der im Anspruch 1 angegebenen Zusammensetzung und einem Mantel aus niedriger schmelzendem Polymermaterial vorliegen.

**17.** Elektretfasern gemäß mindestens einem der Ansprüche 1 bis 16, **dadurch gekennzeichnet, daß** sie als Bikomponentenfaser mit Kern/Mantel-Struktur mit einem Kern aus einem beliebigen spinnfähigen Polymermaterial und einem Mantel aus Elektretwerkstoff der im Anspruch 1 angegebenen Zusammensetzung vorliegen.

**18.** Elektretfasern gemäß mindestens einem der Ansprüche 1 bis 17, **dadurch gekennzeichnet, daß** sie einen Auftrag einer hydrophoben Präparation von 0 bis 0,3 Gew.-%, vorzugsweise 0 bis 0,15 Gew.%, aufweisen.

**19.** Verfahren zur Herstellung der Elektretfasern des Anspruchs 1 durch Verspinnen eines fadenbildenden Werkstoffs aus der Schmelze oder aus einer Lösung in einem geeigneten Lösemittel, wobei in an sich bekannten Weise nach dem Nassspinn- oder dem Trockenspinnverfahren gearbeitet werden kann, erforderlichenfalls Abkühlung der ersponnenen Filamente, Abziehen mit einer Geschwindigkeit im Bereich von etwa 100 bis 8000 m/min, vorzugsweise von 1000 bis 5000 m/min und daran anschließenden weiteren, üblichen Verfahrensschritten, wie erforderlichenfalls Verstreckung und je nach dem vorgesehenen weiteren Einsatz Wirrablage, zusammenfassung zu Garnen oder Kabeln, Texturierung, Fixierung, Schnitt zu Stapelfasern, **dadurch gekennzeichnet, daß** ein Werkstoff versponnen wird, der überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, Ladungssteuermittel der Formel

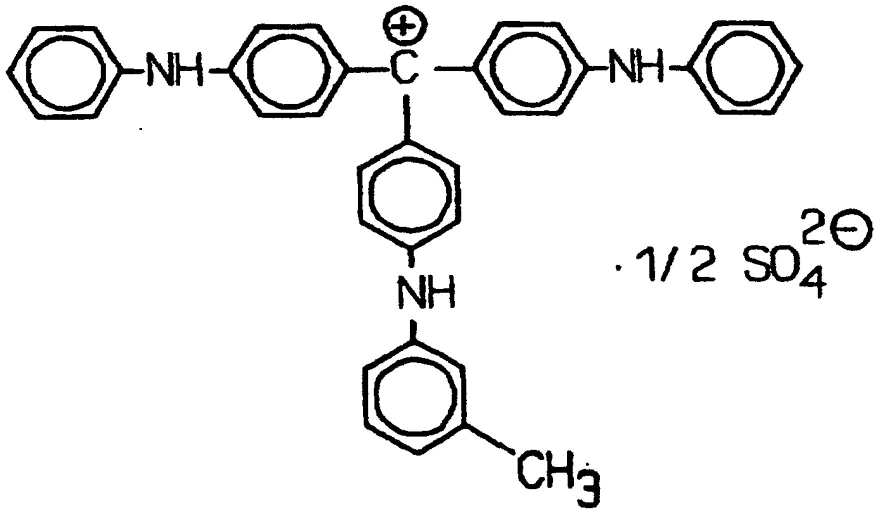

enthält.

**20.** Verfahren zur Herstellung der Elektretfasern des Anspruchs 1 durch Spalten von spaltbaren multilobalen Fasern, die längs der Faserachse sich erstreckende Segmente aus dem Elektretwerkstoff enthalten oder durch Matrixauflösung eines "Island in the Sea"- Filaments dessen Inselbereiche aus dem Elektretwerkstoff bestehen, oder durch Spalten einer Folie aus dem Elektretwerkstoff, **dadurch gekennzeichnet, daß** der Elektretwerkstoff überwiegend ein fadenbildendes Polymerisat oder Polykondensat und 0,01 bis 30 Gew.-% (vorzugsweise 0,01 bis 10, insbesondere 0,1 bis 5 Gew.-%), bezogen auf das Gewicht des Werkstoffs, Ladungssteuermittel der Formel

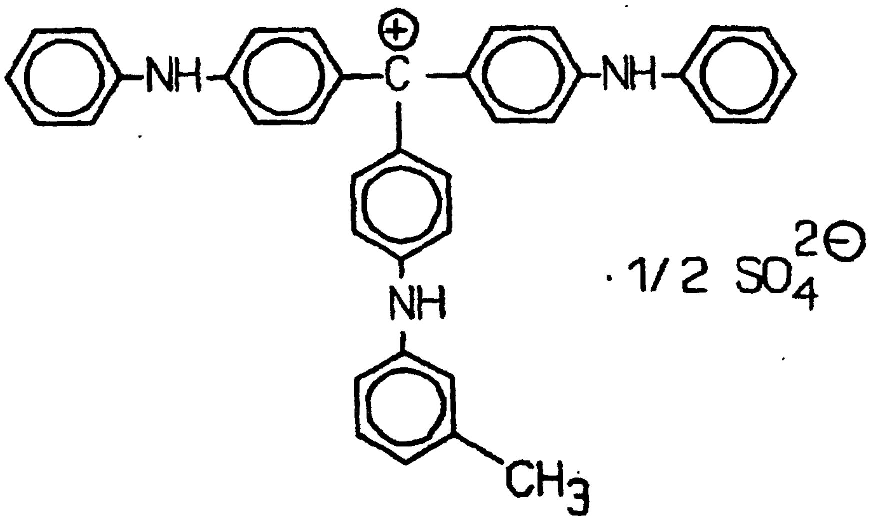

enthält.

**21.** Vliesstoff bestehend aus oder enthaltend Elektretfasern des Anspruchs 1.

**22.** Staubfilter bestehend aus oder enthaltend einen Vliesstoff des Anspruchs 21.

**23.** Verwendung der Elektretfasern des Anspruchs 1 zur Herstellung von Vliesstoffen.

**24.** Verwendung der Elektretfasern des Anspruchs 1 zur Herstellung von Staubfiltern.

**Claims**

**1.** Electret fibres with improved charge stability, **characterised in that** they are made from a material which predominantly contains a filament-forming polymerisate or polycondensate and 0.01 to 30 wt. %, preferably 0.01 to 10, in particular 0.1 to 5 wt. %, related to the weight of the material, of a cation compound, namely a compound with the formula

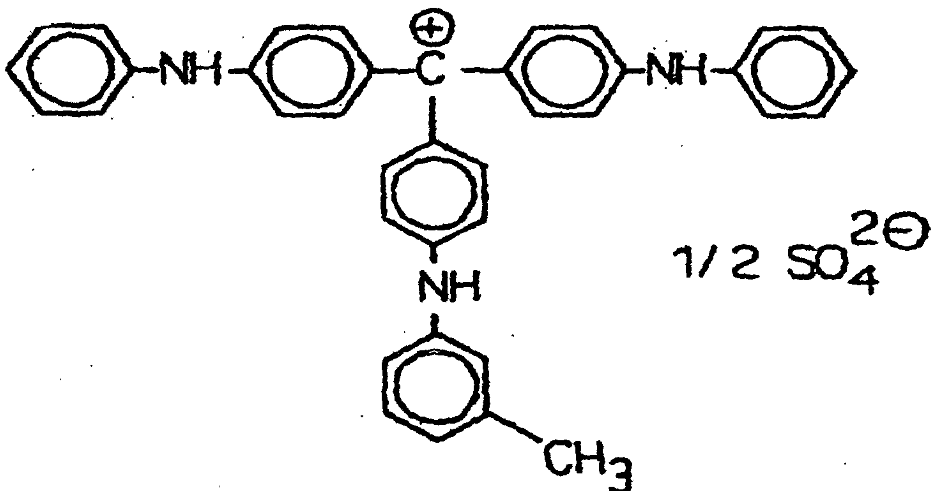

as a charge control agent.

**2.** The electret fibres according to claim 1, **characterised in that** the filament-forming polymerisate or polycondensate is melt-spinnable.

**3.** The electret fibres according to claim 1, **characterised in that** the filament-forming polymerisate or polycondensate is solution-spinnable.

**4.** The electret fibres according to at least one of claims 1 to 3, **characterised in that** the material predominantly contains a filament-forming polymerisate from the group of polyolefins, halogenated polyolefins, polyacrylates, polyacrylonitrile, polystyrene and fluoropolymers.

**5.** The electret fibres according to at least one of claims 1 to 4, **characterised in that** the material predominantly contains a filament-forming polymerisate from the group polyethylene, polypropylene, polyacrylonitrile, polytetrafluoroethylene and perfluorinated ethylene/propylene copolymer.

**6.** The electret fibres according to claim 5, **characterised in that** the material predominantly contains a filament-forming polymerisate from the group polyethylene and polypropylene.

**7.** The electret fibres according to at least one of claims 1 to 3, **characterised in that** the material predominantly contains a filament-forming polycondensate from the group of polyesters, polycarbonates, aliphatic or aromatic polyamides, polyimides, polyetherketones (e.g. PEK and PEEK), polyarylene sulphides especially polyphenylene sulphide, polyacetals and cellulose ester.

**8.** The electret fibres according to at least one of claims 1 to 3 and 7, **characterised in that** the material predominantly contains a filament-forming polycondensate from the group of polyesters, polyetherketones and polyphenylene sulphide.

**9.** The electret fibres according to claim 8, **characterised in that** the material predominantly contains polyalkylene

terephthalate.

**10.** The electret fibres according to at least one of claims 1 to 9, **characterised in that** the material predominantly contains polypropylene.

**11.** The electret fibres according to at least one of claims 1 to 10, **characterised in that** they have a titre in the range from 0.02 to 15 dtex.

**12.** The electret fibres according to at least one of claims 1 to 11, **characterised in that** the tearing strength of the fibres amounts to 20 to 80, preferably 30 to 65 cN/tex, the elongation at tear to 10 to 200%, preferably 10 to 50%, in particular 20 to 30%, the heat shrinkage, measured at 200°C dry ($S_{200}$), 0 to 50%, preferably < 10%.

**13.** The electret fibres according to at least one of claims 1 to 12, **characterised in that** they have a preparation deposit from 0 to 0.3 wt. %, preferably 0 to 0.08 wt. %.

**14.** The electret fibres according to at least one of claims 1 to 13, **characterised in that** they are present in the form of multifilament yarns, cables and fleeces.

**15.** The electret fibres according to at least one of claims 1 to 14, **characterised in that** they are present in combination with a non-electret material as two-component fibres.

**16.** The electret fibres according to at least one of claims 1 to 15, **characterised in that** they are present as bicomponent fibres with a core/sheath structure with a core of electret material with the composition stated in claim 1 and a sheath of low-melting polymer material.

**17.** The electret fibres according to at least one of claims 1 to 16, **characterised in that** they are present as bicomponent fibres with a core/sheath structure with a core of an arbitrary spinnable polymer material and a sheath of electret material with the composition stated in claim 1.

**18.** The electret fibres according to at least one of claims 1 to 17, **characterised in that** they have a deposit of a hydrophobic preparation from 0 to 0.3 wt. %, preferably 0 to 0.15 wt. %.

**19.** A method for producing the electret fibres of claim 1 by spinning a filament-forming material from the melt or from a solution in a suitable solvent, whereby the work can be carried out in a manner known per se according to the wet-spinning or dry-spinning process, if necessary cooling of the spun filaments, drawing at a rate in the range from approx. 100 to 8000 m/min., preferably from 1000 to 5000 m/min., and subsequent further standard process steps, such as, if necessary, stretching and, depending on the intended further use, randomly orientated laying, combination into yarns or cables, texturing, setting, cutting into staple fibres, **characterised in that** a material is spun that predominantly contains a filament-forming polymerisate or polycondensate and 0.01 to 30 wt. % (preferably 0.01 to 10, in particular 0.1 to 5 wt. %), related to the weight of the material, of a charge control agent with the formula

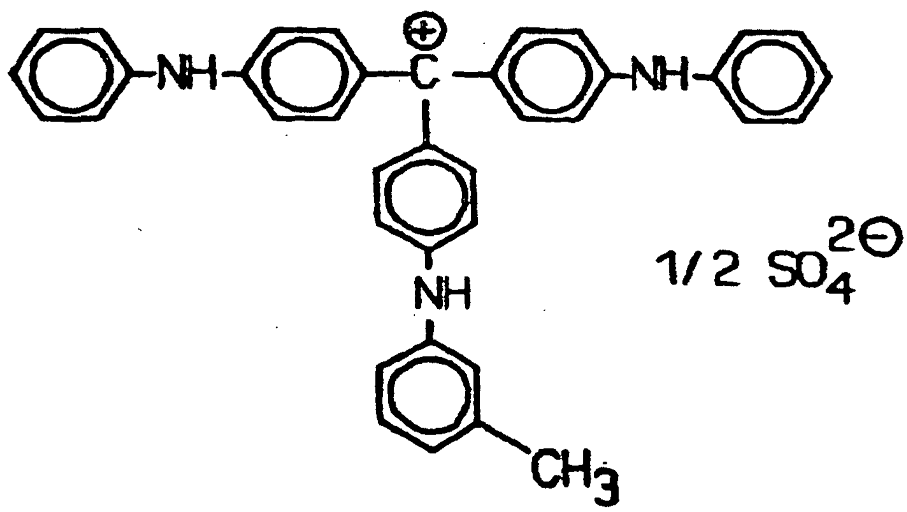

**20.** The method for producing the electret fibres of claim 1 by splitting of splittable multilobe fibres, which contain segments of the electret material extending along the fibre axis, or by matrix dissolution of an "island in the sea" filament whose island areas are made of the electret material, or by splitting a sheet made of the electret material, **characterised in that** the electret material predominantly contains a filament-forming polymerisate or polycondensate and 0.01 to 30 wt. % (preferably 0.01 to 10, in particular 0.1 to 5 wt. %), related to the weight of the material, of a charge control agent with the formula

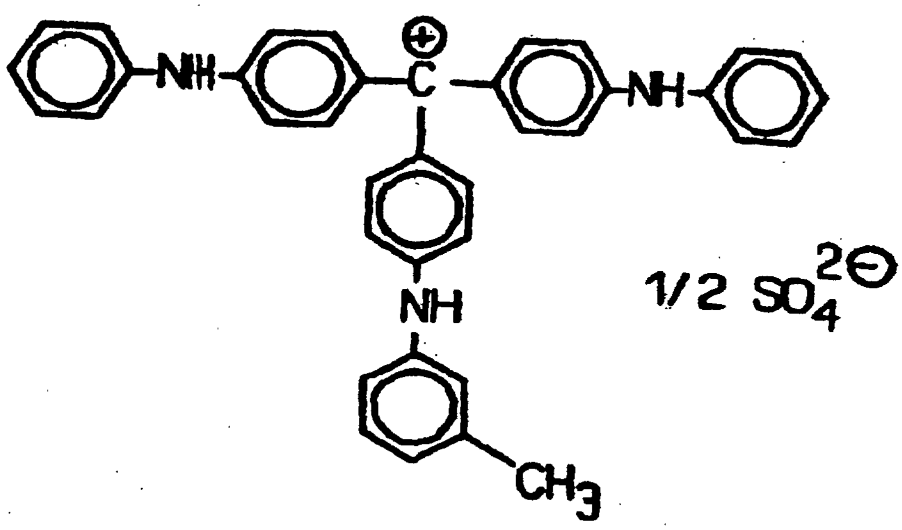

**21.** A non-woven fabric made of or containing electret fibres of claim 1.

**22.** A dust filter made of or containing a non-woven fabric of claim 21.

**23.** The use of the electret fibres of claim 1 for the production of non-woven fabrics.

**24.** The use of the electret fibres of claim 1 for the production of dust filters.

## Revendications

1. Fibres en électret possédant une stabilité de charge améliorée, **caractérisé en ce qu'**elles sont constituées d'un matériau qui contient principalement un polymère ou un polycondensat fibrogène et, à concurrence de 0,01 à 30 % en poids, de préférence de 0,01 à 10, en particulier de 0,1 à 5 % en poids, rapportés au poids du matériau, un composé cationique, plus précisément un composé répondant à la formule

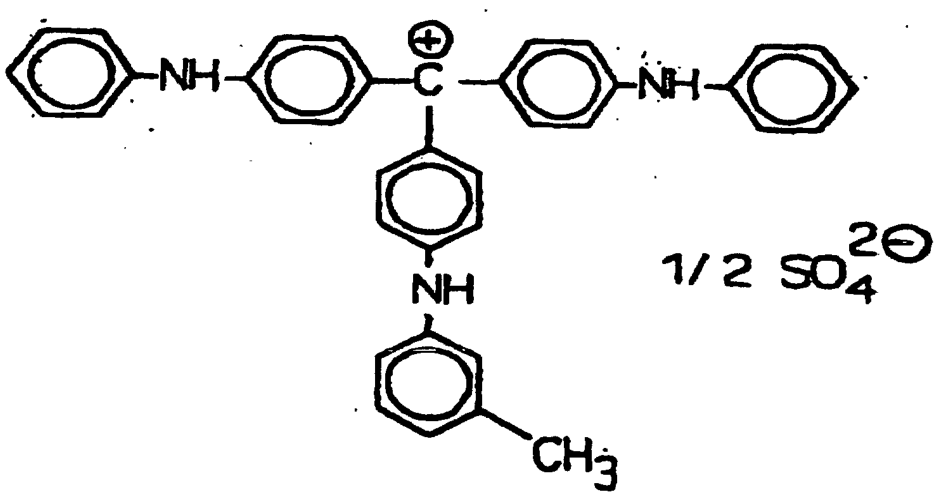

à titre d'agents de réglage de la charge.

2. Fibres en électret selon la revendication 1, **caractérisées en ce que** le polymère ou le polycondensat fibrogène peut être soumis à un filage en fusion.

3. Fibres en électret selon la revendication 1, **caractérisées en ce que** le polymère ou le polycondensat fibrogène peut être soumis à un filage en solution.

4. Fibres en électret selon au moins l'une quelconque des revendications 1 à 3, **caractérisées en ce que** le matériau contient principalement un polymère fibrogène choisi parmi le groupe comprenant des polyoléfines, des polyoléfines halogénées, des polyacrylates, du polyacrylonitrile, du polystyrène et des polymères fluorés.

5. Fibres en électret selon au moins l'une quelconque des revendications 1 à 4, **caractérisées en ce que** le matériau contient principalement un polymère fibrogène choisi parmi le groupe comprenant le polyéthylène, le polypropylène, le polyacrylonitrile, le polytétrafluoréthylène et un copolymère perfluoré d'éthylène/propylène.

6. Fibres en électret selon la revendication 5, **caractérisées en ce que** le matériau contient principalement un polymère fibrogène choisi parmi le groupe comprenant le polyéthylène et le polypropylène.

7. Fibres en électret selon au moins l'une quelconque des revendications 1 à 3, **caractérisées en ce que** le matériau contient principalement un polycondensat fibrogène choisi parmi le groupe comprenant du polyester, des polycarbonates, des polyamides aliphatiques ou aromatiques, des polyimides, des polyéthercétones (par exemple PEK et PEKK), des polyarylènesulfures, en particulier du polyphénylènesulfure, des polyacétals et des esters cellulosiques.

8. Fibres en électret selon au moins l'une quelconque des revendications 1 à 3 et 7, **caractérisées en ce que** le matériau contient principalement un polycondensat fibrogène choisi parmi le groupe comprenant du polyester, des polyéthercétones et du polyphénylènesulfure.

9. Fibres en électret selon la revendication 8, **caractérisées en ce que** le matériau contient principalement du polyalkylènetéréphtalate.

**10.** Fibres en électret selon au moins l'une quelconque des revendications 1 à 9, **caractérisées en ce que** le matériau contient principalement du polypropylène.

**11.** Fibres en électret selon au moins l'une quelconque des revendications 1 à 10, **caractérisées en ce qu'**elles possèdent un titre dans la plage de 0,02 à 15 dtex.

**12.** Fibres en électret selon au moins l'une quelconque des revendications 1 à 11, **caractérisées en ce que** la résistance au déchirement des fibres s'élève de 20 à 80, de préférence de 30 à 65 cN/tex ; l'allongement à la rupture s'élève de 10 à 200 %, de préférence de 10 à 50 %, en particulier de 20 à 30 % ; le retrait à chaud, mesuré après un séchage à 200 °C ($S_{200}$) s'élève de 0 à 50 %, de préférence est inférieur à 10 %.

**13.** Fibres en électret selon au moins l'une quelconque des revendications 1 à 12, **caractérisées en ce qu'**elles présentent une charge de préparation de 0 à 0,3 % en poids, de préférence de 0 à 0,08 % en poids.

**14.** Fibres en électret selon au moins l'une quelconque des revendications 1 à 13, **caractérisées en ce qu'**elles se présentent sous la forme de fils à multifilaments, de câbles et de non-tissés.

**15.** Fibres en électret selon au moins l'une quelconque des revendications 1 à 14, **caractérisées en ce qu'**elles sont présentes en combinaison avec une matière qui n'est pas de l'électret, sous la forme de fibres à deux composants.

**16.** Fibres en électret selon au moins l'une quelconque des revendications 1 à 15, **caractérisées en ce qu'**elles sont présentes sous la forme de fibres à deux composants possédant une structure du type noyau/enveloppe avec un noyau constitué du matériau d'électret de la composition indiquée à la revendication 1 et une enveloppe constituée d'une matière polymère à point de fusion inférieur.

**17.** Fibres en électret selon au moins l'une quelconque des revendications 1 à 16, **caractérisées en ce qu'**elles sont présentes sous la forme de fibres à deux composants possédant une structure du type noyau/enveloppe avec un noyau constitué de n'importe quelle matière polymère apte au filage et une enveloppe constituée du matériau d'électret de la composition indiquée à la revendication 1.

**18.** Fibres en électret selon au moins l'une quelconque des revendications 1 à 17, **caractérisées en ce qu'**elles présentent une charge de préparation hydrophobe de 0 à 0,3 % en poids, de préférence de 0 à 0,15 % en poids.

**19.** Procédé pour la fabrication de fibres en électret selon la revendication 1, par filage d'un matériau fibrogène à partir de la masse fondue ou à partir d'une solution dans un solvant approprié, dans lequel on peut travailler, de manière connue en soi, conformément au procédé de filage par voie humide ou du filage par voie sèche, par refroidissement, en cas de nécessité, des filaments qui ont été soumis au filage, par défilage à une vitesse dans la plage d'environ 100 à 8000 m/minute, de préférence de 1000 à 5000 m/minute et en passant ensuite par d'autres étapes opératoires habituelles, telles que, le cas échéant, un étirage et, respectivement, en fonction de la mise en oeuvre ultérieure prévue, un dépôt à l'état embrouillé, un regroupement pour obtenir des fils ou des câblés, une texturation, une fixation, une découpe pour obtenir des fibres découpées, **caractérisé en ce qu'**on soumet à un filage un matériau qui contient principalement un polymère ou un polycondensat fibrogène et, à concurrence de 0,01 à 30 % en poids (de préférence de 0,01 à 10, en particulier de 0,1 à 5 % en poids), rapportés au poids du matériau, des agents de réglage de la charge répondant à la formule

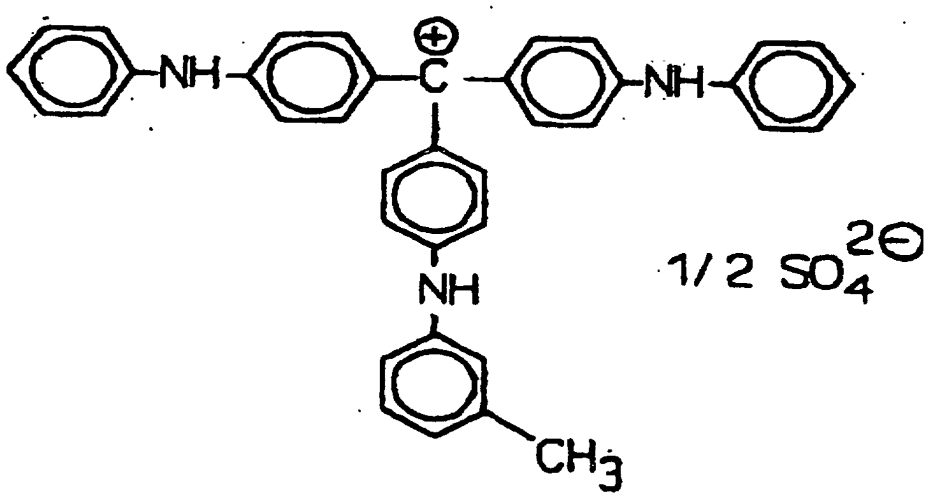

**20.** Procédé pour la préparation des fibres en électret selon la revendication 1, par clivage de fibres multilobées aptes au clivage qui contiennent des segments constitués par le matériau d'électret s'étendant le long de l'axe des fibres, ou par des compositions de la matrice de filaments du type « Island in the Sea » dont les zones formant les îles sont constituées du matériau d'électret, ou par un refendage d'une feuille constituée du matériau d'électret, **caractérisé en ce que** le matériau d'électret contient principalement un polymère ou un polycondensat fibrogène et, à concurrence de 0,01 à 30 % en poids (de préférence de 0,01 à 10, en particulier de 0,1 à 5 % en poids), rapportés au poids du matériau, des agents de réglage de la charge répondant à la formule

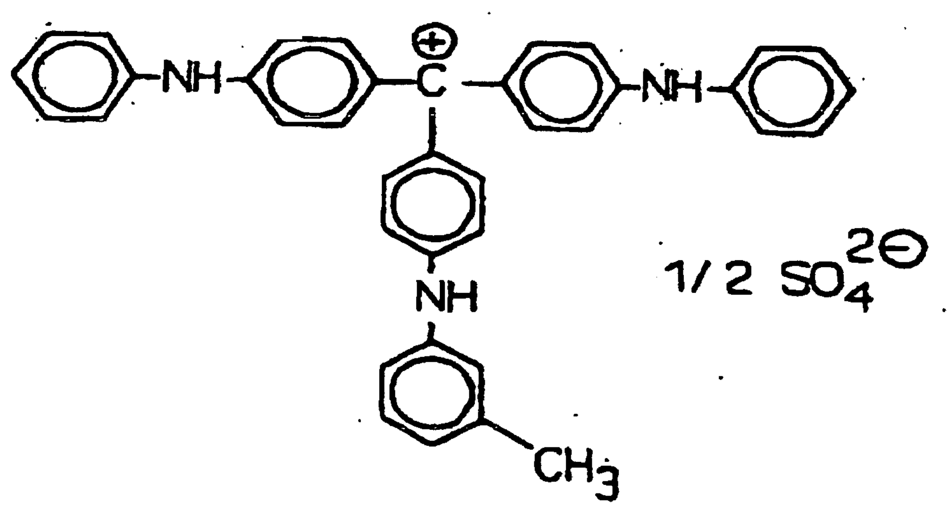

**21.** Non-tissé constitué par ou contenant des fibres en électret selon la revendication 1.

**22.** Filtre anti-poussières constitué par ou contenant un non-tissé selon la revendication 21.

**23.** Utilisation des fibres en électret selon revendication 1 pour la fabrication de non-tissés.

**24.** Utilisation des fibres en électret selon revendication 1 pour la fabrication de filtres anti-poussières.